# EUROPÄISCHE PATENTSCHRIFT

(11) **EP 1 258 812 B1**
(45) Veröffentlichungstag und Bekanntmachung des Hinweises auf die Patenterteilung: **25.02.2004**
(21) Anmeldenummer: 01112149.8
(22) Anmeldetag: 17.05.2001
(51) Int. Cl.: G06F 17/30

(54) **Virtuelle Datenbank heterogener Datenstrukturen**
Virtual database of heterogeneous data structures
Base de données virtuelle de structures de données hétérogènes

(43) Veröffentlichungstag der Anmeldung: 20.11.2002
(73) Patentinhaber: Pressmar, Peter, 71034 Böblingen (DE)
(72) Erfinder: Pressmar, Peter, 71034 Böblingen (DE)
(74) Vertreter: Körber, Martin, Dipl.-Phys.

(56) Entgegenhaltungen:
- WO-A-96/30845
- GB-A- 2 329 044
- US-A- 5 550 971
- US-A- 5 857 195
- US-A- 5 970 490
- US-A- 6 151 608
- DAVIS J P ET AL: "EDICT-an enhanced relational data dictionary: architecture and example" DATA ENGINEERING, 1988. PROCEEDINGS. FOURTH INTERNATIONAL CONFERENCE ON LOS ANGELES, CA, USA 1-5 FEB. 1988, WASHINGTON, DC, USA,IEEE COMPUT. SOC. PR, US, 1. Februar 1988 (1988-02-01), Seiten 184-191, XP010011415 ISBN: 0-8186-0827-7

## Beschreibung

Die vorliegende Erfindung betrifft eine Datenbank zum Erstellen und Verwaltung heterogener Datenstrukturen. Die Erfindung betrifft weiter ein Verfahren, ein Computerprogramm und eine Vorrichtung zum Aufbau und zur Verwaltung dieser Datenbank, sowie zum Austausch von Daten zwischen nicht kompatiblen Systemen.

Die Anforderungen an die Informatik und Kommunikationstechnik sind gegenwärtig einer fortlaufenden Veränderung unterworfen. Eine Anpassung an diese veränderten Anforderungen wird von heutigen Programmen und Systemen nicht immer befriedigend unterstützt. Die über viele Jahre getätigten Investitionen vieler Unternehmen in ihre Datenverarbeitung hat umfangreiche Datenbestände in Altanwendungen aufgebaut, die neuen, innovativen Anwendungen in der Regel nicht mehr zur Verfügung stehen, da die Daten oftmals mit den Besonderheiten der ihr zugrunde liegenden Anwendung eng verknüpft sind.

Um den ständig wachsenden Anforderungen Rechnung zu tragen, müssen die Anwendungen flexibel gestaltet werden. Sich verändernde Informationen werden dabei, um einigermaßen stabile und anpassungsfähige Anwendungen zu erhalten, außerhalb der Programme gelagert. Diese Art der Datenhaltung gilt insbesondere auch für Transformationen an Schnittstellen. Die Hilfsmittel der Programmierer zum Aufbau einer entsprechenden Datenhaltung beschränken sich dabei auf Tabellenwerke und mehrere Arten von Datenbanken.

Tabellenwerke sind leicht veränderbar und offen, können also auch von einem Laien leicht verändert werden. Diesen Vorteilen steht der Nachteil gegenüber, daß Tabellenwerke feste Feldstrukturen aufweisen. Das macht sie inflexibel, und da neue Strukturen somit nicht integriert werden können, sind Tabellenwerke zudem nicht ausbaufähig. Viele Anwendungen benötigen aber unterschiedliche Datenstrukturen. Für jede andersgeartete Anforderung muß eine neue Tabelle aufgebaut werden. Da die Datenstrukturen in Tabellenwerken nicht durch Anwendungen les- und veränderbar sind, bedeutet dies einen enormen Aufwand der mit hohen Kosten verbunden ist.

SQL-Datenbanken weisen eine höhere Ausbaufähigkeit mit mehreren möglichen Datenstrukturen in einem System auf. Ein Datenbankmanagement gewährleistet zudem eine hohe Sicherheit der implementierten Datenstrukturen. Im Gegensatz zu Tabellenwerken sind SQL-Datenbanken nicht offen, d.h. sie sind nur vom Spezialisten veränderbar. Eine Änderung oder eine Neueingabe von Strukturen ist mit einem großen Aufwand verbunden. Eine Inflexibilität der SQL-Datenbanken besteht darin, daß ihre Datenstrukturen nicht durch Anwendungen gelesen oder verändert werden können.

Objektdatenbanken teilen bezüglich des Zugriffs auf Strukturen die Nachteile der SQL-Datenbanken und sind ebenso wie diese nur vom Spezialisten veränderbar. Auch sie weisen eine hohe Ausbaufähigkeit auf, und sind zudem flexibler.

Meta-Datenbanken erfordern keine festen Strukturen, es sind daher unterschiedliche Felder möglich. Von Nachteil ist die Einschränkung auf Feldausprägungen. Meta-Datenbanken sind schwer zu beherrschen. In der Regel bilden sie die Basis für andere Datenbankarten. Auch bei Meta-Datenbanken sind die Datenstrukturen nicht durch Anwendungen les- und veränderbar.

Um Datenbanken unterschiedlicher Architektur abfragen zu können, offenbart US 5 550 971 ein semantisches Datenmodell, das die Architekturen einer oder mehrerer relationaler Datenbanken in Form von Datentypen und Beziehungen zwischen den Datentypen erfasst. Das semantische Datenmodell ist Teil eines Datenbank-Managementsystems und wird dynamisch über Datenbankabfragen gefüllt. Es dient zum Generieren einer, sich an verändernde Datenbankstrukturen dynamisch anpassenden Benutzeroberfläche. Das semantische Datenmodell bildet die Elemente entsprechend den Tabellen der abgefragten Datenbanken in einer hierarchischen Struktur ab. Diese hierarchische Struktur gliedert sich in eine als Meta-Meta-Model Layer' bezeichnete oberste, als 'Meta-Model Layer' bezeichnete mittlere und eine als 'Model Layer' bezeichnete unterste Stufe. Die Daten einer übergeordneten Stufe bilden jeweils eine Abstraktion der Daten der nächst untergeordneten Stufe. Das semantische Datenmodell bietet eine Verwaltung von aufgrund unterschiedlich organisierter Datenbanken unterschiedlich strukturierten Datensätzen.

James P. Davis et. al. stellen in "EDICT - An Enhanced Relational Data Dictionary: Architecture and Example" (Data Engineering 1988, Proceedings. Fourth International Conference, IEEE Comput. Soc. Pr, US 1.2.1988, S. 184-191, XP010011415, ISBN 0-8186-0827-7) ein Data Directory' genanntes mehrschichtiges Verzeichnisschema vor, das zur Verwaltung von, in relationalen Datenbank-Managementsystemen abgelegten Informationen dient. Das Verzeichnis kennt mehrere Abstraktionsebenen, wobei die Daten einer jeweiligen Abstraktionsebene die Struktur der Daten in der darunter befindlichen Ebene festlegen. So findet sich die Strukturdefinition von Daten auf der Ebene des 'Conceptual Schema' in den Daten auf der Ebene des Dictionary Schema', deren Struktur wiederum von Daten auf der Ebene des Dictionary Meta-Schema' festgelegt wind. Das Verzeichnisschema verwaltet die Information über die Struktur der Daten in einer Datenbank getrennt von dieser.

In WO 96/30845 wird eine Tabellenstruktur vorgestellt, die zum Aufbau einer hierarchisch geordneten Datenablage bestimmte Spalten für den Eintrag von Verweisen auf ein Element einer übergeordneten bzw. untergeordneten Hierarchiestufe reserviert. Die Hierarchie dient zur Bestimmung der Relationen zwischen einzelnen Datensätzen.

In GB 2 329 044 wird ein Indexaufbau zur hierarchischen Gliederung von Datensätzen in einer Tabelle einer Datenbank vorgestellt. Die Indexstruktur ist selbst in Form einer Tabelle aufgebaut, wobei ein Index-Datensatz sogenannte 'Position Key' - Einträge aufweist, die miteinander verkettet eine Kennzeichnung ergeben. Aus dem Vergleich der Kennzeichnungen der verschiedenen Index-Datensätze können die zugeordneten Datensätze der Datenbanktabelle in eine hierarchische Relation gesetzt werden. Die Struktur der, in der Datenbank gehaltenen Daten ist homogen. Die Hierarchieinfortnationen werden getrennt von der Datentabelle gehalten.

Eine Datenhaltung als Basis einer flexiblen Gestaltung von Anwendungen, also von Programmen und Systemen, muß offen sein wie bei Tabellen, und zudem äußerst flexibel. Das bedeutet, daß sie keine festen Felder und Strukturen aufweist und darüber hinaus keine Einschränkungen auf Feld- und Strukturausprägungen kennt. Eine weitere Bedingung der Flexibilität ist, daß die Datenstrukturen durch Anwendungen les- und veränderbar sind Die beschriebenen Hilfsmittel erfüllen diese Kriterien nur mangelhaft.

Es ist daher Aufgabe der vorliegenden Erfindung, eine Datenbank anzugeben, welche unterschiedlich strukturierte Datensätze aufnehmen und selbständig verfügbar machen kann um den Aufbau von Programmen und Systemen zu ermöglichen, die sich mit geringem Aufwand an veränderte Anforderungen anpassen lassen oder sich automatisch daran anpassen.

Diese Aufgabe wird gelöst mit einer Datenbank gemäß Hauptanspruch **1** gelöst.

Weiterhin wird die Aufgabe der vorliegenden Erfindung gelöst durch ein Verfahren zum Aufbau und zur Verwaltung einer Datenbasis gemäß Anspruch 16.

Die Aufgabe wird ferner gelöst durch ein Informationsmanagementprogramm gemäß Anspruch 29.

Überdies wird die Aufgabe der vorliegenden Erfindung gelöst durch eine Vorrichtung zur Aufnahme und Verwaltung von Informationen in Form beliebig strukturierter Datensätze gemäß Anspruch 30.

Das vorgeschlagene System einer Datenablage in mehreren Hierarchiestufen erlaubt auf vielfältige Weise die Ablage unterschiedlichst strukturierter Datensätze in einer Datenbank und erfüllt hiermit die Anforderungen an die Informatik und Kommunikationstechnik nach größtmöglicher Flexibilität der Datenhaltung durch Verzicht auf Einschränkungen bezüglich der Feld- und Strukturausprägungen der gespeicherten Informationen. Insbesondere die Anforderungen nach leichter Änderbarkeit der Strukturen und nach größtmöglicher Offenheit des Systems werden erfüllt, da es, insbesondere auch für Laien sehr einfach ist neue Strukturen zu definieren. Die Ausbaufähigkeit der Datenbank wird unterstützt von der leichten Integrierbarkeit neuer Datenstrukturen und ein übersichtliches und sicheres Datenbankmanagement.

Vorteilhafte Weiterbildungen der erfindungsgemäßen Lösung sind durch die in den Unteransprüchen aufgeführten Maßnahmen möglich.

Vorteilhaft werden in einem Grundbaustein die Definitionen zum Aufbau von Informationselementen der ersten Hierarchiestufe der Datenbank vorgenommen. Damit erhält ein Benutzer die Möglichkeit den Grundaufbau der Datenbank seinen Erfordernissen gemäß zu gestalten. Weiterhin erlaubt eine Definition einer Ordnungsstufe vorteilhaft das Gruppieren von Elementen der ersten Hierarchiestufe und/oder Elementen der zweiten Hierarchiestufe. Zweckmäßig enthält ein fünftes internes Datenfeld ein viertes Attribut zur eindeutigen Zuordnung eines Informationselementes zu einem Informationselement oder einem Satz von Informationselementen der Ordnungsstufe.

Der Aufbau der Verknüpfungsstruktur kann insbesondere über die Kombination der Werte der ersten, zweiten und dritten Attribute, bei Existenz einer vierten Hierarchiestufe zusätzlich über die Werte des vierten Attributs ausgeführt sein. Vorteilhaft ist jedem Informationselement in einem sechsten internen Datenfeld der Verknüpfungsstruktur ein fünftes Attribut zur eindeutigen Identifizierung zugeordnet. Damit lassen sich auf einfache Weise Strukturen zum Auffinden der einem Informationselement zugehörigen Felddefinitionen definieren und es ist eine eindeutige Identifizierung eines Datensatzes gegeben.

In einer bevorzugten Ausführungsform der vorliegenden Erfindung ist jedem Informationselement ein Zeitwert zur Bestimmung seiner zeitlichen Referenzierung zugeordnet. Insbesondere setzt sich die zeitliche Referenzierung aus einem initialen Wert und einem finalen Wert zusammen, wobei weiterhin der initiale Wert und der finale Wert der zeitlichen Referenzierung in internen Datenfeldern der Verknüpfungsstruktur aufgenommen werden können. Dies erlaubt die Historisierung von Daten, so daß gleiche Informationen mit unterschiedlichen zeitlichen Referenzen unterschiedliche Gültigkeit besitzen. Überschneidungen von Daten sind somit ausgeschlossen und darüber hinaus erhält ein Anwender die Möglichkeit über die zeitliche Referenz richtige Informationen auszulesen.

Vorzugsweise erfolgt ein Verändern eines Informationselementes zumindest über ein Erzeugen eines neuen Informationselementes als Kopie des zu verändernden Informationselementes gefolgt von einem Verändern des neuen Informationselementes, und dem Zuweisen einer neuen zeitlichen Referenz an das neue Informationselement, so daß größtmögliche Konsistenz der Datenhaltung gewährleistet ist.

Die Zuordnung eines Informationselementes zu einer Hierarchiestufe kann insbesondere aus der Existenz und/oder den Werten der Attribute in den ersten, zweiten und dritten internen Datenfeldern der Verknüpfungsstruktur vorgegeben sein, und bei Existenz einer vierten Hierarchiestufe zusätzlich aus der Existenz und/oder dem Wert des Attributs im vierten internen Datenfeld der Verknüpfungsstruktur. Die Prüfung der Zugehörigkeit eines Datensatzes zu einer Hierarchiestufe reduziert sich hierbei auf das Feststellen bestimmter Werte oder das Fehlen von Werten in den internen Datenfeldern der Verknüpfungsstruktur.

Die in einem Informationselement oder einem Satz von Informationselementen der ersten Hierarchiestufe festgelegten Definitionen bilden vorteilhaft die Vorgabe für die Ausprägung eines Informationselementes der zweiten Hierarchiestufe mit identischem Wert des Attributes im ersten internen Datenfeld der Verknüpfungsstruktur, und die in einem Informationselement oder einem Satz von Informationselementen der zweiten Hierarchiestufe festgelegten Definitionen die Vorgabe für die Ausprägung eines Informationselementes der dritten Hierarchiestufe mit identischem Wert des Attributes im zweiten internen Datenfeld der Verknüpfungsstruktur. Hiermit wird eine einfache und direkte Zuordnung der Felddefinitionen zu ihren Ausprägungsformen erzielt.

Entsprechend einer vorteilhaften Weiterentwicklung der vorliegenden Erfindung weist jeder Satz von Informationselementen ein Anker-Informationselement (39) auf das sich dadurch auszeichnet, daß der Attributwert in dem seine Zuordnung zu einer Hierarchiestufe bezeichnenden internen Datenfeld der Verknüpfungsstruktur identisch ist mit dem Attributwert in dem ihm zugeordneten fünften internen Datenfeld der Verknüpfungsstruktur. Damit wird die eindeutige Identifizierung des Anker-Informationselements, wie sie durch den Attributwert im fünften internen Datenfeld vorgenommen wird, übertragen zur eindeutigen Identifizierung eines Satzes von Informationselementen. Das Anker-Informationselement liefert somit innerhalb der Verknüpfungsstruktur die Basisadresse für das Auffinden eines Satzes zusammengehöriger Informationselemente.

Weiterhin kann jeder Satz von Informationselementen der nicht der dritten Hierarchiestufe angehört zumindest ein Informationselement mit einem, diesen Satz von Informationselementen beschreibenden Inhalt aufweisen. Dies gestattet vorteilhaft die Verwendung von Beschreibungen zur Charakterisierung eines Satzes von Informationselementen. Damit wird zum einen eine Gliederung der Informationstruktur der Datenbank nach verständlichen Kriterien erreicht, zum anderen eröffnen sich über diese beschreibenden Kriterien günstige Suchmöglichkeiten nach einem gewünschten Informationselementesatz

Vorzugsweise ist ein solches Informationselement mit beschreibendem Inhalt das Anker-Informationselement. Das Anker-Informationselement ist somit selbst keine Definitionsgröße, bildet aber die Basis für die Vererbung der Definitionen die im zugehörigen Informationselementesatz festgelegt sind.

Ein logisches Zusammenfassen mehrerer eigenständiger Datenbasen zu einer Datenbasis eröffnet vorteilhaft die Möglichkeit einer plattformunabhängigen virtuellen Datenbank als Pool von Informationen und Strukturinformationen wie umgekehrt auch die physische Teilung der Datenbank selbst.

Vorzugsweise erfolgt eine Interpretation von Datensätzen aus einem Liefersystem extern zur Datenbasis anhand von Datenstrukturinformation über das Liefersystem, die in Form von einem oder mehreren Informationselementen in der Datenbasis abgelegt ist, und weiter kann auch eine Strukturierung von Datensätzen für die Ausgabe an ein Zielsystem extern zur Datenbasis auf der Basis einer Datenstrukturinformation über das Zielsystem, die in Form von einem oder mehreren Informationselementen in der Datenbasis abgelegt ist, erfolgen. Bevorzugt wird hierbei eine Übertragung von Datensätzen aus einer ersten Struktur in eine zweite Struktur nach Zuweisungsregeln vorgenommen, die in Form von einem oder mehreren Informationselementen in der Datenbasis abgelegt sind. Die Strukturierung von Datensätzen externer Datenbanken und auch der erfindungsgemäßen Datenbank kann damit einfach anhand der in der erfindungsgemäßen Datenbank abgelegten Datenstrukturinformation vorgenommen werden.

Vorzugsweise erfolgt die Kommunikation von Anwendungsprogrammen mit der Datenbank in Form von Aufträgen an die Datenbank, wobei ein Auftrag weiterhin zumindest Angaben über die Art des Auftrags aufweisen kann. Dies ermöglicht Anwenderprogrammen Daten anderer Systeme ohne Kenntnis deren Strukturen und Feldattribute zu nutzen. Die Interpretation und gegebenenfalls die Umsetzung der Daten werden vom erfindungsgemäßen Verfahren ausgeführt.

In einer bevorzugten Ausführungsform der vorliegenden Erfindung erfolgt die Steuerung von Aufträgen aus Anwendungsprogrammen an die Datenbank mittels einer zentralen Kontrolleinrichtung, die weiter vorteilhaft eine Prüfung der Integrität von Daten aus einem Auftrag anhand von Regeln vornimmt, die in Form von einem oder mehreren Informationselementen in der Datenbasis der Datenbank abgelegt sind. Vorzugsweise weist ein Auftrag an die Datenbank einen Bearbeitungstermin auf und die zentrale Kontrolleinrichtung bewirkt die Ausführung des Auftrags zum Bearbeitungstermin. Als zentrales System übernimmt somit die zentrale Kontrolleinrichtung den Informationsaustausch zwischen Liefer- und Zielsystemen und sorgt für die termingerechte Bereitstellung der Daten an das Zielsystem.

Bevorzugt führt die zentrale Kontrolleinrichtung Teilaufträge zumindest zweier Anwendungsprogramme, wobei die Teilaufträge zusammen einen gemeinsamen Auftrag an die Datenbank bilden, unabhängig voneinander entsprechend den Erfordernissen eines jeden Teilauftrags aus. Dies entkoppelt das zur Verfügung stellen von Liefer- und Zielsysteminformationen und gewährleistet somit, daß die Laufzeit beider Systeme unabhängig voneinander sein kann.

Eine vorteilhafte Rückmeldung über den Bearbeitungsstand eines erteilten Auftrags wird erreicht, indem die zentrale Kontrolleinrichtung ein Anwendungsprogramm über den Stand der Ausführung eines Auftrags informiert. Zur verbesserten Abstimmung der Informationsdaten zwischen unterschiedlichen Systemen erstellt die zentrale Kontrolleinrichtung auf Basis von Informationen der Datenbank zusätzliche Daten. Eine vorteilhafte Dokumentation der Vorgänge wird erzielt indem zumindest ein Teilvorgang der Ausführung eines Auftrags von der zentralen Kontrolleinrichtung aufgezeichnet wird.

Die vom Informationsmanagementprogramm verwaltete Datenbasis wird in einer bevorzugten Ausführungsform der vorliegenden Erfindung auf einer anderen Datenverarbeitungseinrichtung gehalten als das Informationsmanagementprogramm selbst, so daß beliebige Hardwarestrukturen genutzt werden können.

Vorteilhaft tauscht zumindest eine Datenverarbeitungsanlage der Vorrichtung zur Aufnahme und Verwaltung von Informationen in Form beliebig strukturierter Datensätze Daten über eine Netzwerkverbindung aus. Vorzugsweise ist zumindest eine Datenverarbeitungsanlage der Vorrichtung über ein öffentliches Netzwerk zugänglich. Damit lassen sich vernetzte Systeme und beispielsweise auch das Internet für einen breiten Zugang zur erfindungsgemäßen Datenbank nutzen.

Die erfindungsgemäße Datenbank und das erfindungsgemäße Informationsmanagementprogramm ermöglichen innovative Verbindungen zwischen unterschiedlichen Anwendungssystemen, wobei die Flexibilität in der Datenhaltung noch um eine dynamische Informationshaltung erweitert wird durch die Möglichkeit Datenstrukturen von Anwenderprogrammen nicht nur lesen sondern auch verändern zu lassen. Damit kann das erfindungsgemäße Datenbanksystem als generelle Schnittstelle zwischen kommunizierenden Anwenderprogrammen bzw. Anwendersystemen eingesetzt werden, so daß diese Systeme keine eigenen Schnittstellendefinitionen für den Datenaustausch mit unterschiedlichsten anderen Anwenderprogrammen bzw. -systemen aufweisen müssen. Einzig eine Schnittstelle für das Ein- und Auslesen von Daten muß vorhanden sein. Der Speicher der Schnittstelle muß hierzu keine Definitionen der Datenstrukturen kennen, sondern das Informationsmanagementprogramm kann darin beispielsweise lediglich Bereiche anlegen, die Strukturen und Unterstrukturen beinhalten können, die von außen geliefert werden. Eine Interpretation dieser Informationen erfolgt dann z.B. aus den in der erfindungsgemäßen Datenbank abgelegten Strukturen, wie weiter unten noch detailliert ausgeführt wird. Prinzipiell legt hierzu ein Interpretationsmodul eine Schablone über jede Struktur bzw. Teilstruktur und transformiert die Daten in andere Strukturen bzw. Teilstrukturen. Die transformierten Daten werden vom Informationsmanagementprogramm dann den Zielsystemen unter Berücksichtigung von beispielsweise Terminen, Historisierung, Regelkreisen oder ähnlichem zur Verfügung gestellt. Damit lassen sich ohne großen Aufwand B2B-Anwendungen (Business-to-Business Intranet- bzw. Internet-Anwendungen), Transport- und Logistiksysteme und natürlich auch ein Transformationsservice realisieren. Durch den wahlweisen Aufruf von Informationsmanagementprogramm oder der zentralen Kontrolleinrichtung werden sowohl Peer-to-Peer- Kommunikation als auch Client-Server-Client-Kommunikation ermöglicht. Bei einer Client-Server-Client-Kommunikation sendet ein Anwenderprogramm als Client einen Auftrag an die als Server fungierende zentrale Kontrolleinrichtung. Diese setzt den Auftrag mit Hilfe des Informationsmanagementprogrammes um und stellt das Resultat anderen Anwenderprogrammen (Clients) zur Verfügung. Bei einer Peer-to-Peer-Kommunikation übergibt ein Anwenderprogramm den Auftrag direkt an das Informationsmanagementprogramm; dieses setzt den Auftrag um und übergibt das Resultat dem Auftraggeber. Das Anwenderprogramm leitet dann das Resultat selbst an eine anderes Anwenderprogramm weiter. In einer Mischform der beiden Kommunikationsarten übergibt ein Anwenderprogramm den Auftrag direkt an das Informationsmanagementprogramm; dieses setzt den Auftrag um und stellt das Resultat anderen Anwenderprogrammen zur Verfügung.

Die nachfolgende Beschreibung erläutert die vorliegende Erfindung ausführlich anhand von Ausführungsbeispielen mit Bezug auf die beiliegenden Figuren, wobei
Figur 1 den erfindungsgemäßen Zusammenhang zwischen den intensionalen Informationselementen einer Hierarchiestufe und den extensionalen Informationselementen der dieser Hierarchiestufe untergeordneten Hierarchiestufe zeigt,
Figur 2 den struktographischen Aufbau der erfindungsgemäßen Datenbank zeigt,
Figur 3 ein vereinfachtes, beispielhaftes Schema einer erfindungsgemäßen Datenbank zeigt,
Figur 4 eine Eingabemaske zur Anlage einer DELTA-Ebene zeigt,
Figur 5 eine Eingabemaske zur Anlage einer ALPHA-Ebene zeigt,
Figur 6 eine Eingabemaske zur Anlage einer BETA-Ebene zeigt,
Figur 7 eine Eingabemaske zur Anlage einer GAMMA-Ebene zeigt,
Figur 8 in einem Flußdiagramm die Verarbeitungslogik des erfindungsgemäßen Informationsmanagementprogramms zeigt,
Figur 9 ein Blockdiagramm der Basiskomponenten des erfindungsgemäßen Informationsmanagementprogramms darstellt,
Figur 10 die Speicherung einer Interpretationsstruktur in der erfindungsgemäßen Datenbank zeigt,
Figur 11 die Speicherung von Zuweisungsregeln in der erfindungsgemäßen Datenbank zeigt,
Figur 12 in einem Flußdiagramm die Ablaufkomponenten des Interpretationsmoduls zeigt, und
Figur 13 ein Funktionsablaufschema eines Transformationsservice des erfindungsgemäßen Interpretationsmoduls zeigt.

Die erfindungsgemäße Datenhaltung fußt auf einem Aufbau der Datenbank in Hierarchiestufen, wobei jede Hierarchiestufe einen Informationsteil aufweist, dessen Elemente, die Informationselemente, einen Datensatz bilden. Als Datensatz wird in diesem Zusammenhang ein unter logischen Gesichtspunkten als Einheit behandelter Satz von Datenelementen gleichen oder verschiedenen Typs verstanden.

Die Informationselemente einer übergeordneten Hierarchiestufe besitzen intensionalen Charakter, in anderen Worten, sie legen das Datenschema der ihr zugeordneten Informationselemente in der nächstniedrigeren Hierarchiestufe fest. Umgekehrt fungieren die Informationselemente einer untergeordneten Hierarchiestufe gemäß dieser Beziehung als extensionale Datenobjekte, deren Struktur von den als Metadaten zu verstehenden zugeordneten Informationselementen der nächsthöheren Hierarchiestufe definiert wird.

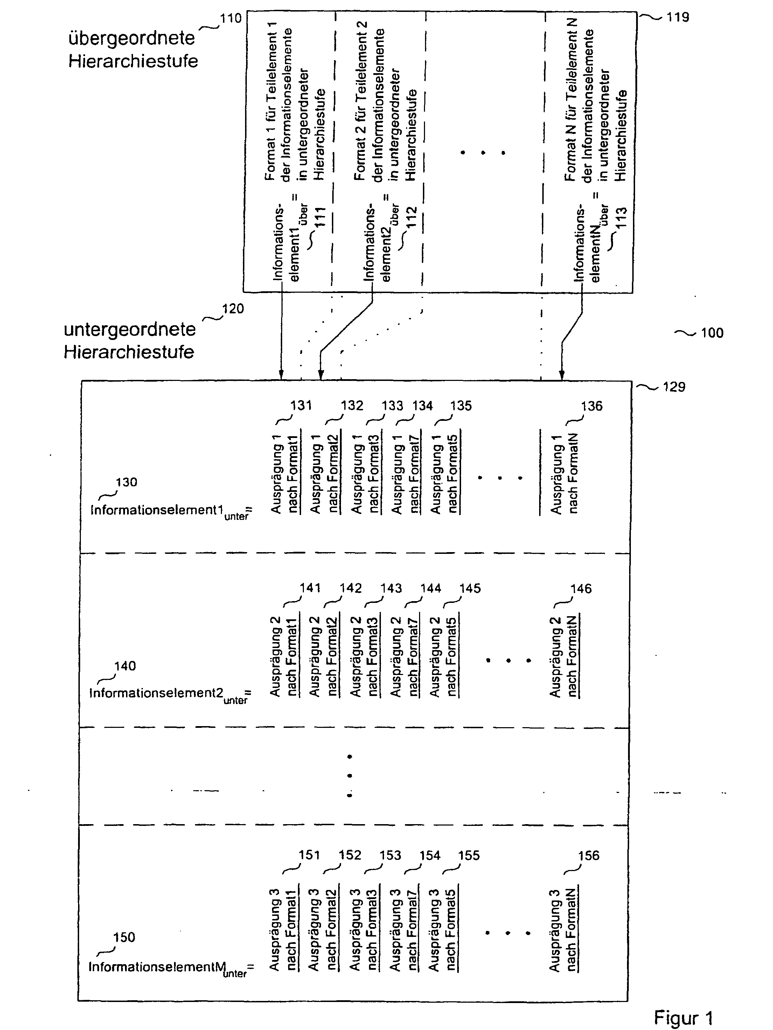

Im Beispiel der Figur 1 ist ein Satz 119 von zusammengehörigen Informationselementen_{über} 111, 112 bis 113 einer übergeordneten Hierarchiestufe 110 angegeben, worin jedes der Informationselemente_{über} 111, 112 bis 113 eine eigene Formatanweisung enthält. Eine solche Formatanweisung umschließt typischerweise mehrere Formateigenschaften wie beispielsweise ein beschreibendes Element, Feldlängenangabe, einen Felddatentyp etc.. Jeder Satz 119 von zusammengehörigen Informationselementen_{über} 111, 112 bis 113 legt somit ein Datenbankschema fest.

Die mit dem Informationselementesatz 119 verknüpften Informationselementeᵤₙₜₑᵣ 130, 140 bis 150 der direkt untergeordneten Hierarchiestufe 120 bilden eine Datenbankausprägung des über den Informationselementesatz 119 definierten Datenbankschemas. Jedes der Informationselementeᵤₙₜₑᵣ 130, 140 bis 150 ist ein Satz von Datenelementen, wobei jedes der Datenelemente 131, 132 bis 156 eine Ausprägung einer Formatanweisung darstellt, wie sie in einem der Informationselemente_{über} 111, 112 bis 113 definiert wird. Ein Informationselementᵤₙₜₑᵣ 130, 140 oder 150 kann daher auch als Tupel einer durch einen Satz 119 von Informationselementen_{über} 111, 112 bis 113 definierten Datenbank angesehen werden. Die Reihenfolge der Datenelemente in einem Informationselementᵤₙₜₑᵣ kann hierbei von der Reihenfolge der Informationselemente_{über} 111, 112 bis 113 im Satz 119 abweichen. Typischerweise wird die Reihenfolge der Datenelemente über spezielle Formateigenschaften innerhalb der Informationselemente_{über} 111, 112 bis 113 festgelegt. Die Reihenfolge der Datenelemente innerhalb der Informationselementeᵤₙₜₑᵣ 130, 140 bis 150 ist dagegen identisch, wobei aber nicht alle Datenelemente besetzt sein müssen, bzw. anders ausgedrückt, es muß nicht zu jedem der Informationselemente_{über} 111, 112 bis 113 eine Ausprägung in jedem der Informationselementeᵤₙₜₑᵣ 130, 140 bis 150 vorhanden sein.

Damit die einzelnen Datenelemente innerhalb eines Informationselementes voneinander unterschieden werden können wird ein Feldtrennzeichen, im Beispiel der Figur 1 ein "|", an das Ende eines jeden Datenelementes gesetzt. Die Ausprägung des Feldtrennzeichens ist, wie weiter unten ausgeführt, wählbar. Es markiert innerhalb eines Informationselementes das Endes eines vorangehenden Datenelementes und falls vorhanden, folgt auf das Feldtrennzeichen der Beginn des nächsten Datenelementes.

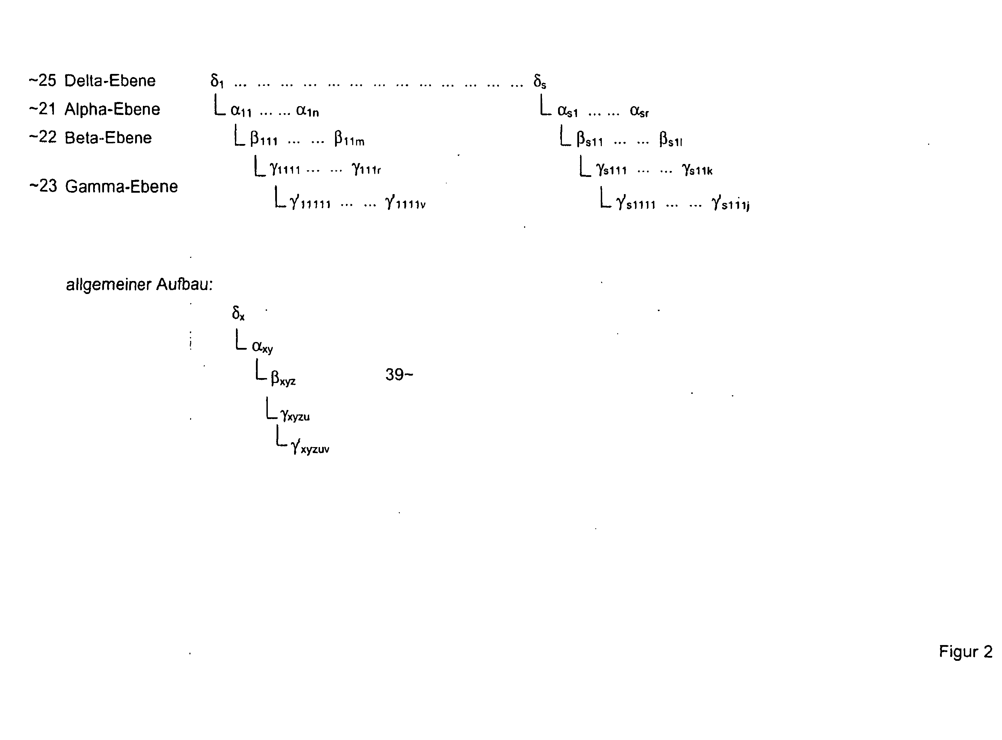

Die in der Figur 2 veranschaulichte Organisation der Informationselemente gemäß eines ersten Ausführungsbeispiels der vorliegenden Erfindung gibt einen Überblick über die Hierarchiestufen 21, 22, und 23 und die Abhängigkeiten zwischen den Informationselementen dieser Hierarchiestufen. Die erfindungsgemäße Datenbank ist in drei Hierarchiestufen 21, 22, und 23 angelegt. In der obersten Hierarchiestufe 21, in der Folge als ALPHA-Ebene bezeichnet, werden die Datenbankschemata für die zweite Hierarchiestufe 22, in der Folge als BETA-Ebene bezeichnet, definiert. Jedes Informationselement der ALPHA-Ebene ist Teil eines Satzes 119 von Informationselementen 111, 112 bis 113, wobei die ALPHA-Ebene i.a. mehrere dieser Sätze 119, in der Figur als α₁₁ bis αₛₖ bezeichnet, beherbergt. Zur vereinfachten Referenzierung wird in der Folge ein beliebiger Satz von Informationselementen der ALPHA-Ebene allgemein als α_{xy} bezeichnet.

Zu jedem Satz α_{xy} befinden sich in der BETA-Ebene üblicherweise mehrere Informationselementeᵤₙₜₑᵣ 130, 140 bis 150, die wiederum zu Sätzen 119 von Informationselementen_{über} 111, 112 bis 113, in der Figur 2 als β₁₁₁ bis βₛᵣₗ bezeichnet, zusammengefaßt werden können. Analog zur ALPHA-Ebene wird im folgenden ein beliebiger Satz von Informationselementen der BETA-Ebene allgemein als β_{xyz}. bezeichnet. Jeder Satz von Informationselementen der BETA-Ebene β_{xyz} definiert ein Datenbankschema für eine Klasse von Informationselementen der dritten Hierarchiestufe (23), als GAMMA-Ebene bezeichnet, γ_{xyzu}.

Im Unterschied zu den Informationselementsätzen β_{xyz} der BETA-Ebene enthalten die Informationselementsätze γ_{xyzu} der GAMMA-Ebene keine Formatanweisungen, sondern die eigentliche Information in einer Struktur, wie sie in den entsprechenden Informationselementsätzen der BETA-Ebene und darüber in der ALPHA-Ebene festgelegt wurde. Eine Gruppierung einzelner Informationselemente der GAMMA-Ebene γ'_{xyzu} zu Informationselementsätzen γ_{xyzu} ist nicht notwendig, kann aber als weiteres Strukturelement in der vorliegenden Datenbank verwendet werden.

Fakultativ kann, wie in der Figur 2 dargestellt, eine Ordnungsstufe (25) zur Informations-Paketbildung definiert werden. Anders als in der ALPHA- und BETA-Ebene werden in dieser, im folgenden als DELTA-Ebene bezeichneten Ordnungsstufe keine Datenschemata für untergeordnete Hierarchiestufen festgelegt. Vielmehr dienen die Elemente δₓ der DELTA-Ebene dem Zusammenfassen von Informationselementsätzen der ALPA- oder BETA-Ebene zu logischen Einheiten. Damit wird die Gruppierung von Informationen innerhalb einer gemeinsamen Ordnungsstufe erreicht. Ein Informationselement δₓ der DELTA-Ebene hat daher keinen definitionsbildenden sondern rein bezeichnenden und/oder beschreibenden Charakter.

Vorteilhaft besitzt jeder Informationselementesatz der ALPHA-Ebene α_{xy} und der BETA-Ebene β_{xyz} ein oder zwei Informationselemente mit rein beschreibendem Charakter. Ein solches Element des Satzes α_{xy} bzw. β_{xyz} ist kein direkter Bestandteil des definierten Datenbankschemas, sondern übernimmt die Rolle der Bezeichnung und/oder der Beschreibung des Datenbankschemas. Daher gibt es für diese Art von Informationselementen in einem Satz β_{xyz} keine Entsprechung in einem Definitionssatz α_{xy} der ALPHA-Ebene. Für die Übersichtlichkeit der Datenablage und als übergeordnete Suchkriterien leisten sie aber einen nicht zu unterschätzenden Beitrag.

Die Basis der Datenbank bildet die Definition der Formatanweisungen für die Informationselemente α_{xy} der ALPHA-Ebene bzw. kurz ausgedrückt die Basisfelder. Die Festlegung der Basisfelder ist geschützt, kann also während des Betriebs der Datenbank nicht geändert werden. Damit ist sichergestellt, daß die Datenbank stets die gleichen Logiken verarbeitet. In der logischen Abstraktionsebene der erfindungsgemäßen Datenbank sind die Basisfelder Bestandteil eines Grundbausteins, der zumindest Angaben über den Namen, den Datentyp sowie die Länge einer Formatanweisung der ALPHA-Ebene enthält. Diese drei Informationen, nämlich Namen eines Feldes, Datentyp eines Feldes und Länge eines Feldes, ziehen sich darüber hinaus durch alle Datenstrukturen aller Hierarchiestufen. Alle Datenfelder genügen zumindest diesem Grundschema. Im Grundbaustein können zusätzliche Felder definiert werden. Diese werden ebenfalls nach dem Grundschema aufgebaut. Damit erhält man einen Aufbau des Grundbausteins mit einer ersten Sektion für Basiselemente und einer zweiten Sektion für erweiternde Elemente. In einer besonderen Ausführungsform kann die Ausprägung der Basisfelder von einem Benutzer oder automatisch mittels einer Anwendung vorgenommen und verändert werden

Die in der folgenden Tabelle angegebenen Ausprägungen von Basisfeldern sind standardmäßig im Grundbaustein enthalten:

| | **Feldbezeichnung** | **Datentyp** | **Länge** | **Auswahl zugelassener Werte** | **Muß-feld** | **Auswahl änderbar** |
|---|---|---|---|---|---|---|
| Basiselement des Grund-bausteins | Feld**Name** Feld**Länge** Feld**Ausprägung** | Alphanumerisch | 50 | | ja | nein |
| | | Numerisch | 2 | | ja | nein |
| | | Alphanumerisch | 1 | | ja | nein |
| Erweiterung des Grund-bausteins | Feld**Status** | Alpha | 1 | S=Schlüssel D=Daten | nein | nein |
| | **Statusreihenfolge** | Numerisch | 1 | | nein | nein |
| | **Statustrennzeichen** | Alphanumerisch | 1 | ~ | nein | ja |
| | **Feldtrennzeichen** | Alphanumerisch | 1 | \| | nein | ja |
| | **Dynamisierungsfeld** | Alpha | 1 | D=Dynamisierbar | nein | ja |
| | **Binärablage** | Alpha | 1 | O=Ordner | nein | nein |
| | | | | D = Dateien | | |
| | **Ausprägungsstandard** | Alphanumerisch | 1 | A = Alpha | nein | ja |
| | | | | C =Alphanumerisch | | |
| | | | | 9=Numerisch | | |
| | | | | X = Hexadezimal | | |
| | | | | B=Binär | | |
| | | | | F=Bin-fixed | | |
| | | | | L = Listbox | | |
| | | | | S=Auswahl system-definierter Kriterien | | |

Es sei darauf hingewiesen, daß es sich bei diesen Angaben um Standard- bzw. Voreinstellungen mit beispielhaftem Charakter handelt, die jederzeit anders ausgeführt oder, entsprechend der oben erwähnten besonderen Ausführungsform im Zuge der primären Strukturierung der erfindungsgemäßen Datenbank geändert werden können. Allerdings müssen diese Angaben als für die Definitionen und Verwaltung einer bereits angelegten Datenbank als nicht weiter veränderbar gelten, da sie in einem geschützten Bereich der Datenbank abgelegt sind. Änderungen der Angaben lassen sich bei einer bereits angelegten Datenbank nur im Verfahren einer generellen Reorganisation zum Neuaufbau der Datenbank durchführen. Erweiterungen der Voreinstellungen sind dagegen auch bei einer bereits angelegten Datenbank möglich.

Ein Informationselement der ALPHA-Ebene ist eine erste Ausprägung der Definitionen wie sie in den Basisfeldern des Grundbausteins vorgenommen wird. Es muß aber nicht für jedes Basisfeld des Grundbausteins ein Datenelement aufweisen. Basisfelder, die in der Spalte "Mußfeld" ein "nein" aufweisen sind fakultativ; bei Bedarf können sie verwendet werden, ihre Verwendung ist aber nicht zwingend. Basisfelder mit einem Vermerk "ja" in der Spalte "Mußfeld" sind dagegen obligatorisch. Eine Sonderstellung nehmen die Anker-Informationselemente der ALPHA-Ebene ein. Sie stellen lediglich eine Ausprägung der Basiselemente Name, Datentyp sowie Länge dar.

Dieses Basisfeld "FeldName" definiert ein alphanumerisches Feld mit einer Länge von 50 Stellen. Ein, der Definition dieses Basisfeldes zugeordnetes Datenelement in einem Informationselement der ALPHA-Ebene enthält den Namen dieses Informationselementes, ist maximal 50 Zeichen lang und verwendet Zeichen vom alphanumerischen Datentyp. "FeldLänge" definiert einen numerischen Datentyp mit maximal zwei Stellen für ein Datenelement. Dieses Datenelement in einem Informationselement der ALPHA-Ebene dient zur Angabe der maximalen Länge eines zugeordneten Datenelementes in den Informationselementen der BETA-Ebene. Da "99" die größte darstellbare Zahl mit zwei Stellen ist, kann damit kein Datenelement der BETA-Ebene 99 Zeichen überschreiten. Die Basisfelddefinition "FeldAusprägung" definiert ein alphanumerisches Datenfeld von einem Zeichen Länge in den Informationselementen der ALPHA-Ebene. Eine Auswahl zugelassener Werte wird bei den Basiselementen des Grundbausteins im Beispiel nicht definiert, ist jedoch möglich.

Die bisher besprochenen drei Basisfelddefinitionen können als Basiselement des Grundbausteins bezeichnet werden, da sie die minimal notwendige Information für den Aufbau eines Datenbankschemas definieren. Sie sind die Voraussetzung für die Anlage einer Struktur in der ALPHA-Ebene und liegen fest definiert darüber. Die Informationselemente der ALPHA-Ebene sind jedoch nur eine erste Ausprägung der Basisfelder.

Die erste erweiternde Basisfelddefinition "FeldStatus" eröffnet die Möglichkeit anzugeben ob ein damit klassifiziertes Datenelement dem Schlüsselteil oder dem Datenteil eines Informationselementes angehört. Die Reihenfolge von Datenelementen mit gleicher Statusdefinition kann mit Hilfe einer Angabe im erweiternden Basisfeld "Statusreihenfolge" festgelegt werden. Die Felddefinition hierzu sieht im Beispiel der obigen Tabelle ein numerisches Feld von einem Zeichen Länge vor. Das in der Felddefinition des erweiternden Basisfeldes "Statustrennzeichen" angegebene Zeichen dient zur Trennung des Schlüssel- vom Datenteil in den Informationselementen. Üblicherweise, aber nicht notwendigerweise ist in den Informationselementen der Schlüsselteil dem Datenteil vorangestellt. Das in der Tabelle angegebene Statustrennzeichen "-" kann gemäß der Angabe in der Spalte "Auswahl änderbar" jederzeit durch ein anderes ersetzt werden. Dasselbe gilt für die Festlegung von " |" als Feldtrennzeichen und das Zeichen "D" in der erweiternden Basisdefinition "Dynamisierungsfeld". Die Klassifizierung eines Informationselementes als dynamisierbar, wie sie mit einem entsprechenden Eintrag im Dynamisierungsfeld eines Informationselementes der ALPHA-Ebene vorgenommen wird, bedeutet, daß die entsprechenden Feldausprägungen in Datenelementen von Informationselementen der BETA-Ebene automatisch durch ein Interpretationsprogramm verändert werden können, also dynamisch sind.

Wie der obigen Tabelle zu entnehmen ist die Verwendung eines Feldtrennzeichens fakultativ. Die Verwendung eines Feldtrennzeichens erübrigt sich z.B. bei der Verwendung fester Feldlängen. Dynamisierbare Felder oder Feldern die ohne feste Länge machen jedoch die Verwendung eines solchen Zeichens obligatorisch. Weiterhin kann alternativ zum Dargestellten das System ein standardmäßig fest vorgegebenes Feldtrennzeichen verwenden, so daß die Notwendigkeit einer entsprechenden Definition im Grundbaustein entfällt.

Im vorletzten erweiternden Basisfeld "Binärablage" der obigen Tabelle werden zwei Codezeichen zur Bestimmung der Ablage binärer Dateien festgelegt. Das Codezeichen "O" gibt an, daß binäre Dateien physisch außerhalb der Datenbank, während mit dem Codezeichen "D" angezeigt wird, daß binäre Dateien im Datenbereich der Datenbank abgelegt werden. Im ersten Fall der Ablage binärer Dateien außerhalb der Datenbank werden die Dateien in Ordnern und Unterordnern abgelegt, deren gegliederter Aufbau die Rangordnung der Hierarchiestufen und der Schlüsselelemente widerspiegelt. Das Informationsmanagementprogramm greift auf diese Dateien mit Hilfe der in den Informationselementen der GAMMA-Ebene der Datenbank gespeicherten Information zu.

Im letzten erweiternden Basisfeld "Ausprägungsstandard" wird eine Auswahl zugelassener Werte definiert, die in den passenden Datenfeldern der ALPHA- und der BETA-Ebene als Code zum Festlegen eines Datentyps für zugeordnete Datenfelder der jeweils untergeordneten Hierarchiestufe ausgewählt werden können.

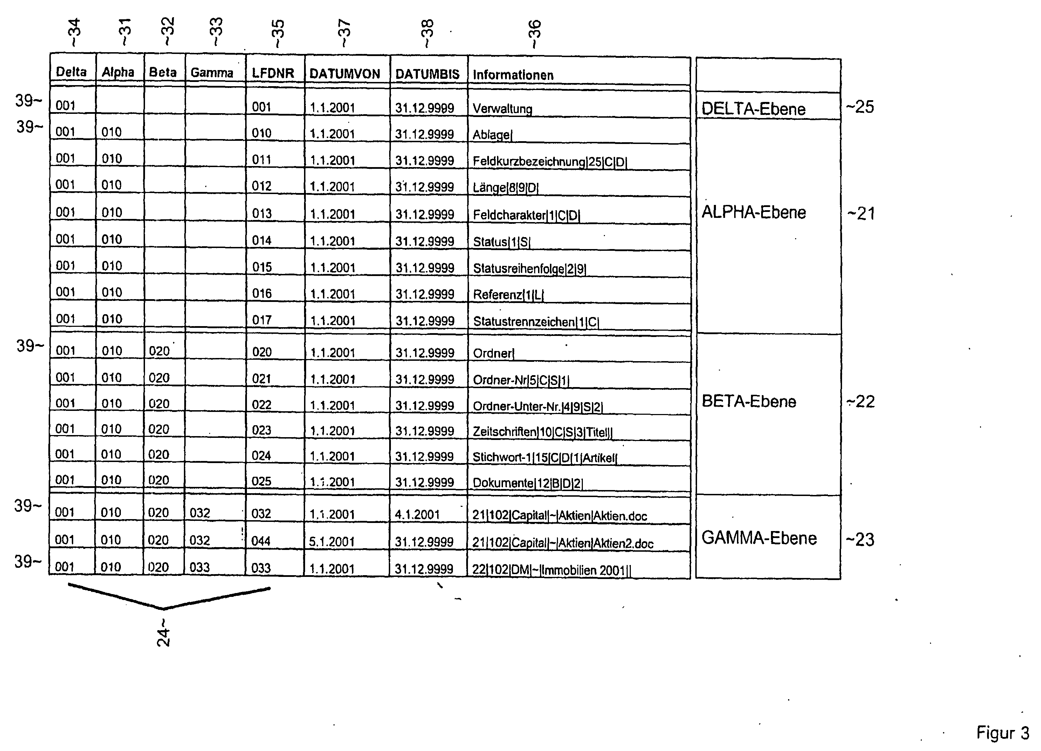

In der Figur 3 ist ein vereinfachtes, beispielhaftes Schema einer Informationsspeicherung in einer erfindungsgemäßen Datenbank dargestellt. Zur Realisierung der Hierarchiestruktur erfolgt die Informationsspeicherung in einer Metastruktur 24 mit 37 und 38, die in der Figur 3 als Tabelle dargestellt ist. Die Metastruktur ist zugleich eine Ausprägung einer Verknüpfungsstruktur 24 zur Verbindung von Informationen auf den unterschiedlichen Hierarchiestufen. Zu jeder Hierarchiestufe existiert in dieser Metastruktur ein internes Datenfeld, das als festes Feld definiert ist und in der Folge als Hierarchiefeld bezeichnet wird. In dem der Figur 3 zugrunde gelegten Ausführungsbeispiel mit vier Hierarchiestufen sind daher vier Hierarchiefelder definiert, das Feld "Delta" 34 für die DELTA-Ebene, das Feld "Alpha" 31 für die ALPHA-Ebene, das Feld "Beta" 32 für die BETA-Ebene und das Feld "Gamma" 33 für die GAMMA-Ebene. Die in der Figur 3 gegebene Reihenfolge der Hierarchiefelder ist sinnvoll für die Leistungsfähigkeit der Datenbank, kann aber entsprechend anderen Erfordernissen abgewandelt werden. Die Metastruktur enthält ein weiteres internes Datenfeld, im Beispiel der Figur 3 mit "Informationen" bezeichnet, zur Aufnahme der Informationselemente.

Die Größe und Ausprägung der Hierarchiefelder wird entsprechend den Anforderungen bei Anlage der Datenbank definiert. Größe und Ausprägung sind von der zu erwartenden Anzahl von Sequenzen in der Datenbank abhängig. Unter Sequenz wird ein Eintrag von Daten in Form eines Informationselementes mit den zugehörigen Attributen der Metastruktur in die Datenbank verstanden. Um zum Beispiel 9.999.999.999 Sequenzen in der Datenbank zu ermöglichen, können die internen Felder mit einer Länge von zehn Stellen bei numerischer Ausprägung definiert werden. Bei sehr großen Datenmengen bietet sich ein binärer Datentyp an. Um eine Definition der internen Datenfelder in einer bereits existierenden Datenbank zu ändern, werden deren Sequenzen vollständig exportiert und anschließend mit einer modifizierten Definition der internen Datenfelder reimportiert.

Die Speicherungslogik wird über Einträge in die Hierarchiefelder, in der Folge als Attribute bezeichnet, umgesetzt. Die Zuordnung einer Sequenz zu einer bestimmten Hierarchiestufe wird über das Vorhandensein von Attributen in den Hierarchiefeldern gesteuert. Legt man eine Rangfolge zwischen den Hierarchiefeldern so fest, daß der höchste Rang vom Feld "Delta", gefolgt vom Feld "Alpha" und darunter dem Feld "Beta" belegt wird, und das Feld "Gamma" den niedrigste Rang einnimmt, kann die Zuordnung einer Sequenz zu ihrer Hierarchiestufe ermittelt werden, indem die Identität des rangniedrigsten Hierarchiefeldes festgestellt wird, das noch ein Attribut aufweist. Eine Sequenz der GAMMA-Ebene weist, falls eine DELTA-Ebene existiert, demzufolge in allen vier Hierarchiefeldern ein Attribut auf, während bei einer Sequenz der BETA-Ebene nur in den Hierarchiefeldern "Delta", "Alpha" und "Beta" Attribute vorhanden sind. Entsprechend sind bei einer Sequenz der ALPHA-Ebene nur das "Delta"- und "Alpha"-Feld mit einem Attribut gefüllt und bei Sequenzen der DELTA-Ebene sind ausschließlich im "Delta"-Feld Attribute vorhanden.

Die Verknüpfung der Informationselemente niedriger Hierarchiestufen mit Informationselementsätzen höherer Hierarchiestufen wird über den Wert der Attribute in den Hierarchiefeldern gesteuert. Sequenzen mit identischen Attributen in gleichen Hierarchiefeldern sind einander zugeordnet.

Zwei beliebige Informationselemente der GAMMA-Ebene sind Mitglieder der selben Gruppe γ_{xyzu} innerhalb dieser Hierarchiestufe, wenn ihre Sequenzen identische Attributwerte in den Hierarchiefeldern aufweisen. Das Informationselement mit identischem Wert im Feld "LFDNR" und im Hierarchiefeld "Gamma" ist das Anker-Informationselement 39 dieser Gruppe. Die weiteren Mitglieder dieser Gruppe sind von diesem Anker-Informationselement abgeleitet.

Das Datenschema zu einem Informationselement γ'_{xyzu} der GAMMA-Ebene wird von einem Informationselementesatz β_{xyz} festgelegt, dessen Sequenzen exakt den selben Attributwert in den Hierarchiefeldern "Beta" und "Alpha" aufweisen. Analog hierzu, findet sich das Datenschema zu einem Informationselement der BETA-Ebene in einem Informationselementesatz α_{xy} dessen Sequenzen identische Werte im Hierarchiefeld "Alpha" aufweisen. Bei Vorhandensein einer DELTA-Ebene müssen in beiden Situationen auch die Attributwerte im Hierarchiefeld "Delta" übereinstimmen. Alle Sequenzen die denselben Attributwert im Hierarchiefeld "Delta" aufweisen, gehören derselben logischen Einheit an.

Im vereinfachten Beispiel der Figur 3 ist eine einzige logische Einheit, das DELTA-Element δ₀₀₁ mit dem Attributwert "001" (im Hierarchiefeld "Delta") definiert. Alle weiteren Sequenzen der Datenbank im Beispiel sind Mitglieder dieser logischen Einheit, da sie einen identischen Attributwert im Hierarchiefeld "Delta" aufweisen.

Auf der ALPHA-Ebene ist genau ein Informationselementesatz α₀₀₁₀₁₀ mit einem Attributwert "010" im Hierarchiefeld "Alpha" definiert. Die zugehörigen Sequenzen umfassen die fortlaufenden Nummern "010" bis "017" im internen Datenfeld "LFDNR" der Metastruktur. Die Attribute im internen Datenfeld "LFDNR" 35 dienen der eindeutigen Identifizierung einer Sequenz bzw. eines Informationselementes in der erfindungsgemäßen Datenbank. Größe und Datentyp entsprechen denselben Kriterien wie sie für Hierarchiefelder gelten. "LFDNR" ist nur ein Beispiel für eine Feldbezeichnung und kann, wie auch die Namen der Hierarchiefelder für jede Datenbank frei gewählt werden.

Jedes Informationselement im Informationselementesatz α₀₀₁₀₁₀ ist ein Datensatz bestehend aus Datenelementen, deren Definitionen in den Basisfeldern des Grundbausteins vorgenommen wurden. Eine Sonderstellung nimmt das Informationselement mit dem zugeordneten Attributwert "010" im Feld "LFDNR" ein, das ausschließlich eine Ausprägung des Basisfelds "Feldname" ist und eine Kurzbeschreibung zur Bezeichnung des Informationselementesatzes α₀₀₁₀₁₀ enthält. Es ist das Anker-Informationselement dieses Informationselementesatzes mit dem Attributwert "010" im Hierarchiefeld "Alpha". Dieser "Anker" bildet die Basis der Vererbung der Definitionen von α₀₀₁₀₁₀ auf Informationselemente der BETA-Ebene die ebenfalls den Attributwert "010" im Hierarchiefeld "Alpha" aufweisen, da er selbst jedoch keine Definitionsgröße darstellt, wird er aber nicht an diese weitervererbt. Neben dem für die Kurzbeschreibung reservierten Anker-Informationselement kann ein weiteres für die Aufnahme einer Langbeschreibung vorgesehen werden. Auch dieses stellt keine Definitionsgröße dar und wird folglich nicht auf Informationselemente der BETA-Ebene weitervererbt. Anders als das Anker-Informationselement bildet es keine Basis der Vererbung. Die nicht für Beschreibungen verwendeten Informationselemente, im folgenden als Standardinformationselemente bezeichnet, sind eine Ausprägung des im Grundbaustein definierten Datenschemas. Obligatorisch sind jedoch nur die Kernelemente des Grundbausteins. Die Verwendung weiterer Basisfeldern ist gemäß der Anlage in obiger Tabelle fakultativ.

Zur Vereinfachten Darstellung wird im Folgenden ein Informationselement mit einem zugeordneten Attributwert "xyz" im internen Datenfeld "LFDNR" als Informationselement oder Datensatz mit der laufenden Nummer xyz angesprochen.

Der Datensatz mit der laufenden Nummer 011 enthält im ersten Datenelement das Basisfeld "Feldname" mit der Ausprägung "Feldkurzbezeichnung", getrennt durch das Feldtrennzeichen "|" im zweiten Datenelement das Basisfeld "FeldLänge" mit der Ausprägung "25" und weiter durch ein Feldtrennzeichen getrennt im dritten Datenelement das Basisfeld "Feldausprägung" mit dem Codezeichen "C" als Ausprägung. Das Codezeichen "D" im vierten Datenelement gibt an, daß die zugehörige Definition in einem Datensatz der BETA-Ebene dynamisch ist. Insgesamt definiert dieser Datensatz genau ein Feld, respektive genau ein Datenelement in einem zugeordneten Informationselement der BETA-Ebene. Eine Ausprägung dieses Datenelementes enthält eine Kurzbezeichnung des es enthaltenden Informationselementes mit einer maximalen Länge von 25 Zeichen vom alphanumerischen Datentyp. Eine automatische Änderung des Datenelementformats durch ein Interpretationsprogramm ist zugelassen oder anders ausgedrückt, das Datenelementformat ist dynamisch.

Analog hierzu definiert der Datensatz mit der laufenden Nummer 012 ein Feld für die Angabe einer Feldlänge, wobei maximal 8 Zeichen vom alphanumerischen Datentyp für die Angabe einer Feldlänge (die Feldlänge bezieht sich auf ein Datenelement der GAMMA-Ebene) zugelassen sind. Auch in diesem Falle ist eine Dynamisierung der Ausprägungen dieser Felddefinition auf BETA-Ebene vorgesehen.

Die weiteren Datensätze des Informationselementesatzes α₀₀₁₀₁₀, die Felder als Datenelemente der Informationslemente der BETA-Ebene definieren legen ein dynamisierbares Datenelement für die Definition eines Feldcharakters von einem Zeichen Länge des alphanumerischen Typs fest, sowie nichtdynamisierbare Datenelemente zum Festlegen eines Feldstatus (1 Zeichen lang, Datentyp: Auswahl systemdefinierter Kriterium), einer Stausreihenfolge (2 Zeichen lang, Datentyp: numerisch), eine Referenz (1 Zeichen lang, Datentyp: Listbox) und ein Statustrennzeichen (1 Zeichen lang, Datentyp: alphanumerisch). Referenz bedeutet, daß Informationen referenziert werden, beispielsweise aus anderen Feldern oder Dateien. Im angegeben Beispiel wird die referenzierte Information in einer Listbox zur Auswahl einer Teilinformation angeboten.

Die Sequenzen mit einer laufenden Nummer von "020" bis einschließlich "024" definieren den Informationslementesatz β₀₀₁₀₁₀₀₂₀. Das Informationselement mit der laufenden Nummer "020" ist das Anker-Informationselement von β₀₀₁₀₁₀₀₂₀ und enthält eine Kurzbeschreibung mit dem Inhalt "Ordner". Analog zu den Informationselementsätzen der ALPHA-Ebene kann auch in den Informationselementsätzen der BETA-Ebene ein Informationselement für eine Langbeschreibung vorgesehen werden.

Entsprechend zu den Definitionen in α₀₀₁₀₁₀ besteht ein Datensatz von β₀₀₁₀₁₀₀₂₀ aus Datenelementen, die Ausprägungen der Felder "Feldkurzbezeichnung", "Länge", "Feldcharakter", "Status", "Statusreihenfolge", "Referenz" und "Statustrennzeichen" sind. Datenelemente, die in einem Datensatz für ein Feld keinen Wert aufweisen, werden jedoch weggelassen. Jeder Datensatz bzw. jedes Informationselement von β₀₀₁₀₁₀₀₂₀ stellt wiederum eine Felddefinition für ein Datenelement in einem zugeordneten Informationselement der GAMMA-Ebene dar.

Abgesehen vom beschreibenden Element ist der Informationslementesatz β₀₀₁₀₁₀₀₂₀ in zwei Teilsätze unterteilt. Der erste Teilsatz bestehend aus den Sequenzen mit den laufenden Nummern "021" bis "023" definiert das Datenschema des Schlüsselteils eines zugeordneten Informationselementes der GAMMA-Ebene; der zweite Teilsatz mit den laufenden Nummern "024" und "025" definiert das Datenschema des Datenteils eines zugeordneten Informationselementes der GAMMA-Ebene.

Der Datensatz mit der laufenden Nummer "021" enthält die Ausprägungen der Felddefinitionen aus den Informationselementen mit der laufenden Nummer "011", "012", "014" und "015". Er definiert ein Feld mit der Bezeichnung "Ordner-Nr" von fünf Zeichen Länge alphanumerischer Feldausprägung mit Schlüsselstatus. In der Statusreihenfolge nimmt das Feld den Rang 1 ein, d.h. im Schlüsselteil eines zugeordneten Informationselementes der GAMMA-Ebene steht es an erster Stelle. Der Datensatz mit der laufenden Nummer "022" enthält eine weitere Ausprägung dieser Felddefinitionen. Er definiert ein Feld mit der Bezeichnung "Ordner-Unter-Nr." von vier Zeichen Länge, numerischen Datentyps mit Schlüsselstatus. Die Statusreihenfolge ist 2, d.h. im Schlüsselteil eines zugeordneten Informationselementes der GAMMA-Ebene steht es an zweiter Stelle. Der Datensatz mit der laufenden Nummer "023" ist eine Ausprägung der Felddefinitionen aus den Informationselementen mit der laufenden Nummer "011" bis "016" in der angegeben Feldreihenfolge. Das alphanumerische Schlüsselfeld mit der Statusreihenfolge 3 und der Länge 10 nutzt eine Referenzierungsverbindung namens "Titel" um über eine Listbox eine Zeitschrift auszuwählen. Damit enthält der erste Teilsatz von β₀₀₁₀₁₀₀₂₀ drei Sequenzen zur Definition von Schlüsselelementen zugeordneter Informationselemente der GAMMA-Ebene, wobei die Ausprägungen der ersten beiden Schlüsselelemente frei eingegeben werden können, die Ausprägung des dritten Datenelements als Selektion aus einer vorgegebenen Referenzliste erfolgt.

Im zweiten Teilsatz von β₀₀₁₀₁₀₀₂₀ zur Definition des Datenteils von Informationselementen der GAMMA-Ebene wird im ersten Datensatz mit der laufenden Nummer "024" ein Datenelement am Beginn des Datenteils eines zugeordneten Informationselementes der GAMMA-Ebene mit der Bezeichnung "Stichwort-1", fünfzehn Zeichen Länge und vom alphanumerischen Datentyp sowie eine Referenzverbindung namens "Artikel" definiert. Durch die Referenzangabe wird ähnlich wie oben die Ausprägung eines zugehörigen Datenelementes auf Werte aus der Referenzliste "Artikel" beschränkt. Der zweite Datensatz mit der laufenden Nummer "025" definiert, mittels der Angabe der Statusreihenfolge das zweite Datenelement im Datenteil eines zugeordneten Informationselementes der GAMMA-Ebene. Es trägt die Bezeichnung "Dokumente", weist eine Feldlänge von 12 Zeichen auf und ist vom binären Datentyp.

In der GAMMA-Ebene weist das Beispiel der Figur 3 drei Sequenzen mit den laufenden Nummern "032", "044" und "033" auf. Die beiden erstgenannten Sequenzen besitzen mit "032" einen identischen Attributwert im Feld "Gamma", sind daher innerhalb der GAMMA-Ebene gruppiert. Wie aus der Figur leicht zu erkennen, sind auch die Informationselemente dieser Sequenzen nach dem selben Schema aufgebaut. Das erste Datenelement, das dem Feld "Ordner-Nr" entspricht, enthält den Wert "21", analog hierzu enthält das zweite Datenelement als "Ordner-Unter-Nr." den Wert "0102". Das dritte Datenelement entspricht dem Feld "Zeitschriften" und bezieht seinen Wert über die Referenzverbindung "Titel", die in der Sequenz mit der laufenden Nummer "023" festgelegt wurde. Die folgende Tilde, das Statustrennzeichen, gibt an, daß mit dem dritten Datenelement der Schlüsselteil der Informationselemente endet. Der Aufbau des Schlüsselteils übernimmt die Funktion einer logischen Gliederung der Informationsstruktur die, bei Verwendung eines Feldes für die Binärablage mit dem Wert "O", zusammen mit der Struktur der Hierarchiestufen in eine tatsächliche, von den üblichen Betriebssystemen unterstützte Ablagestruktur umgesetzt wird. Das Feld "Stichwort-1" ist in beiden Informationselemente mit dem Wert "Aktien" belegt. Dieser Wert wurde über die Referenzverbindung "Artikel" ausgewählt. Das zweite Datenelement des Datenteils entspricht dem Feld "Dokumente" und enthält im ersten Informationselement der Gruppe den Wert "Aktien.doc", im zweiten den Wert "Aktien2.doc". Das Informationselement mit der laufenden Nummer 032 ist das Anker-Informationselement dieser Gruppe. Das zweite Mitglied der Gruppe mit der laufenden Nummer 044 wurde aus diesem abgeleitet. Dies ist kann auch an der zeitlichen Referenzierung der beiden Sequenzen in den internen Datenfelder "DATUMVON" 37 und "DATUMBIS" 38 abgelesen werden, aus der hervorgeht, daß sich der Gültigkeitszeitraum des Informationselementes mit der höheren laufenden Nummer direkt an den Gültigkeitszeitraum des Anker-Informationselementes anschließt.

Das dritte Informationselement der GAMMA-Ebene mit der zugeordneten laufenden Nummer "033" unterscheidet sich im Schlüsselteil von den ersten beiden nur durch einen anderen Wert der ausgewählten Zeitschrift ("DM"). Der Datenteil enthält ausschließlich einen Wert ("Immobilien") aus der Referenzverbindung "Artikel". Der Wert für das Feld "Dokumente" wurde im Beispiel offen gehalten. Das Informationselement bezeichnet damit nur einen logischen Ablageort, noch kein Dokument.

Wie bereits angesprochen können die Ausprägungen der Informationselemente der BETA-Ebene automatisch durch ein Interpretationsprogramm abgeändert werden, sofern die Felddefinitionen im zugehörigen Informationselementesatz als dynamisierbar gekennzeichnet wurden. So können z.B. Feldlängen, Ausprägungen oder auch andere Informationen verändert werden. Dies geschieht durch eine Analyse der Informationselemente der GAMMA-Ebene beispielsweise beim Einspielen von Daten bzw. generell, wenn das Interpretationsprogramm auf die Daten der GAMMA-Ebene zugreift.

Um hierbei die Konsistenz der Informationen zu bewahren, wird jedem Informationselement eine zeitliche Referenzierung zugeordnet. Diese zeitliche Referenz datiert die Gültigkeit eines Informationselementes. In der Ausführungsform der erfindungsgemäßen Datenbank wie sie schematisch vereinfacht im Beispiel der Figur 3 dargestellt ist, enthält die Metastruktur zwei weitere interne Datenfelder, "DATUMVON" 37 zur Aufnahme eines initialen und "DATUMBIS" 38 zur Aufnahme eines finalen Wertes der Gültigkeit. Wie auch bei den anderen internen Datenfeldern sind die Namen dieser internen Datenfelder für die zeitliche Referenzierung bei Anlage der Datenbank frei wählbar.

Gleiche Informationen mit unterschiedlicher zeitlicher Referenzierung bedeuten unterschiedliche Gültigkeit. Eine korrekte Interpretation der in Informationselementen abgelegten Datensätze erfolgt über die Prüfung der Gültigkeit. Um beispielsweise die Datenstruktur eines Informationselementes zu verändern, wird zunächst eine neue Sequenz als Kopie der ursprünglichen angelegt und für diese Kopie eine neue zeitliche Referenzierung festgelegt. In der bzw. den übergeordneten Hierarchiestufen werden nun die der neuen Datenstruktur entsprechenden Informationselementsätze angelegt. Diese enthalten in den Hierarchiefeldern dieselben Attribute wie die der Originalsequenz zugeordneten, als zeitliche Referenz jedoch die Werte der Sequenzkopie. Schließlich wird die Datenstruktur des Informationselementes der Sequenzkopie entsprechend modifiziert. Die angegebene Reihenfolge ist eine von vielen möglichen und kann beim Aufsetzten der Datenbank festgelegt werden.

Aufbau und Verwaltung der Datenstruktur der erfindungsgemäßen Datenbank erfolgen mittels eines Informationsmanagementprogramms, dessen Verfahrensschritte im folgenden näher beschrieben werden.

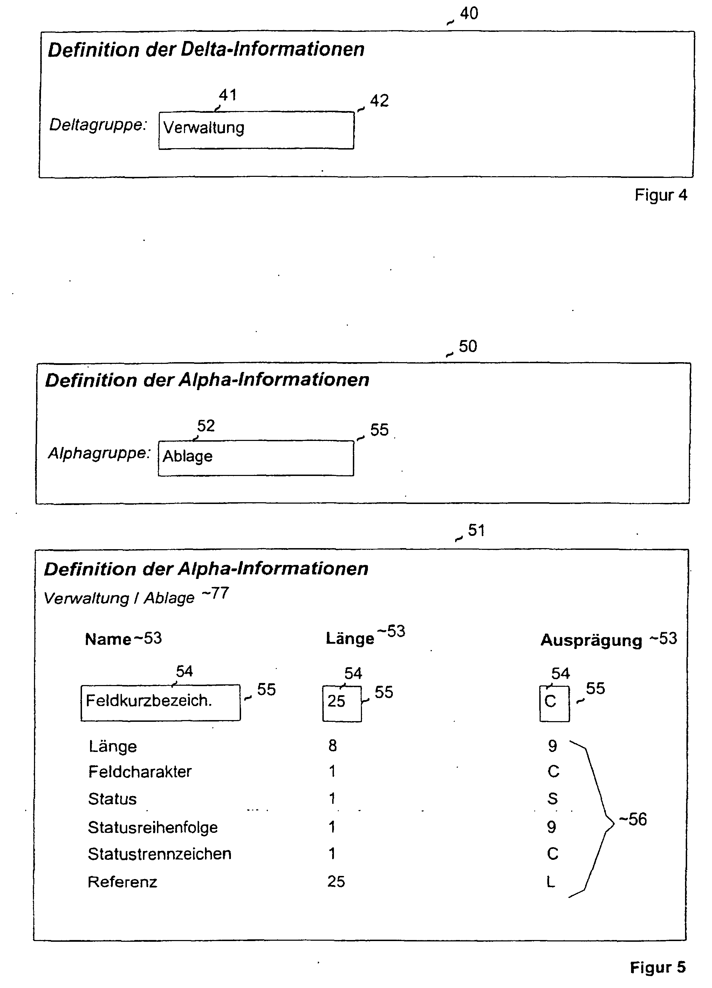

In der Figur 4 ist die Eingabemaske 40 zur fakultativen Anlage einer DELTA-Ebene dargestellt. Für einen Anwender beschränkt sich die Anlage einer DELTA-Ebene auf die Defmition eines ersten Elements δₓ in dieser Ebene. δₓ wird über eine Eingabe einer Bezeichnung 41 in einem Eingabefeld 42 angelegt. In der Figur 4 wurde "Verwaltung" als Bezeichnung verwendet. In einer weiteren Ausführungsform der vorliegenden Erfindung kann zusätzlich eine Beschreibung des Elements eingegeben werden. Die Zuweisung eines Attributs in das Feld "Delta", im Beispiel der Figur 3 der Wert "001", erfolgt üblicherweise automatisch.

Figur 5 zeigt die Eingabemasken zur Anlage einer ALPHA-Ebene vermittelt über die Anlage eines Satzes von Sequenzen für das Festlegen eines Informationselementesatzes α_{xy}. In einer ersten Eingabemaske 50 wird die Bezeichnung 52 des Informationselementesatzes eingegeben, Im Beispiel die Bezeichnung "Ablage". Wie zuvor für die DELTA-Ebene, kann auch hier in einer weiteren Ausführungsform der vorliegenden Erfindung zusätzlich eine Beschreibung des Informationselementesatzes angegeben werden. In einer zweiten Eingabemaske 51 werden sukzessive die einzelnen Informationselemente von α_{xy} definiert. Zur übersichtlichen Darstellung sind in der Figur 4 nur die Basisfelder 53 der Kerndefinitionen des Grundbausteins angezeigt. Im angegebenen Beispiel werden die Datenelemente 54 eines Informationselementes (jedes Datenelement entspricht jeweils einer Ausprägung einer Basisfelddefinition) in Eingabefeldern 55 unterhalb der Feldbezeichnung 53 eingegeben. Bereits definierte Informationselemente 56 werden darunter angezeigt.

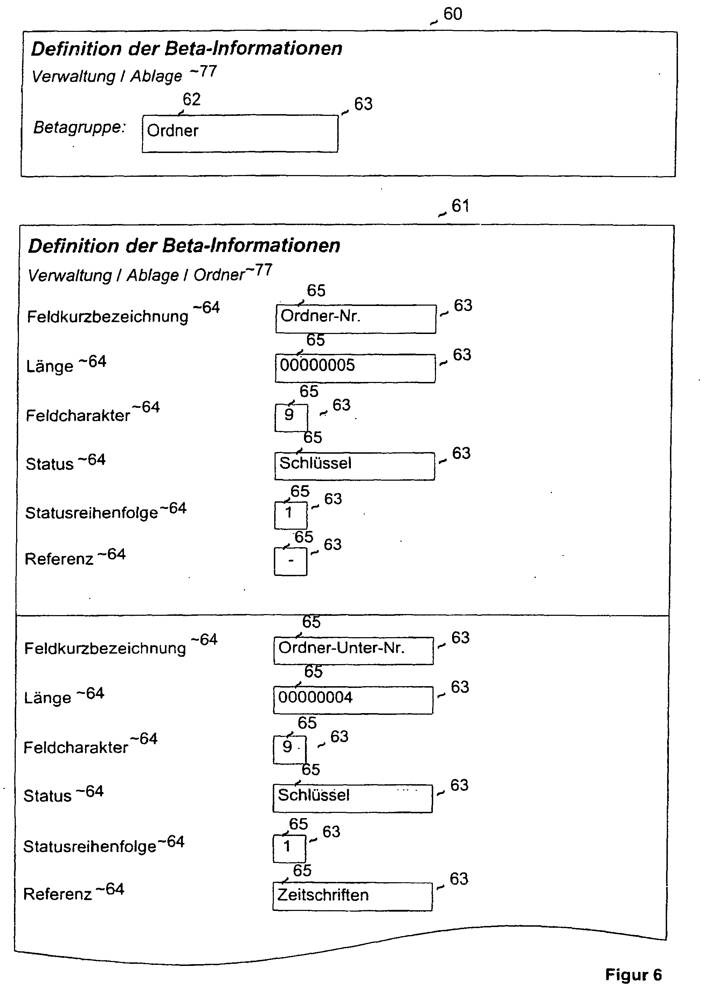

Die Eingabemaske für die BETA-Ebene besteht wiederum aus zwei Teilmasken, wie in Figur 6 dargestellt. Analog zu den Ebenen der darüberliegenden Hierarchiestufen wird in einer ersten Teilmaske 60 eine Bezeichnung 62 des Informationselementesatzes β_{xyz} und gegebenenfalls eine Beschreibung eingegeben. Die zweite Teilmaske 61 enthält Bezeichnungen 64 der Informationselemente des zuvor als Vorlage ausgewählten Informationselementesatzes α_{xy}, und in Beziehung dazu Eingabefelder 63 für die Eingabe der aktuellen Ausprägung 65 dieser Felder für ein Informationselement der BETA-Ebene.

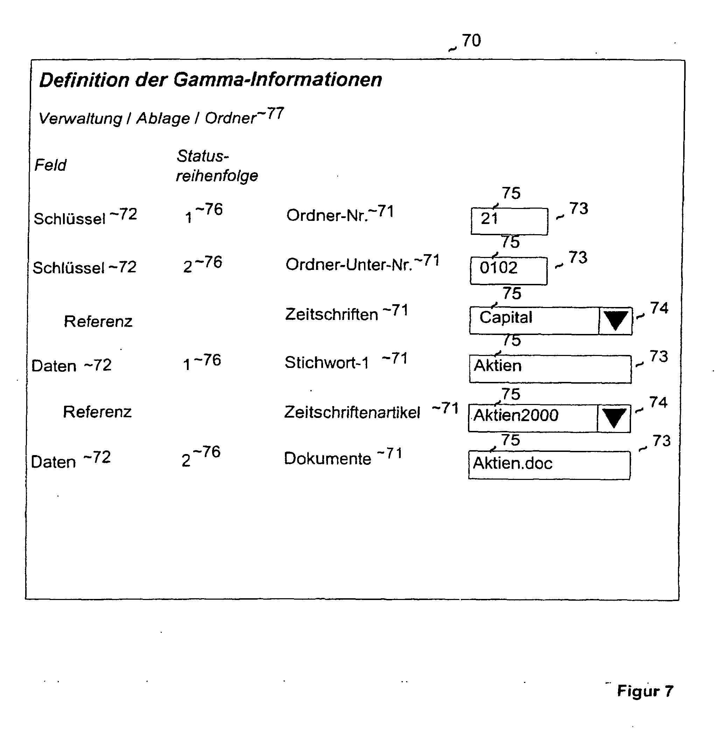

Die Notwendigkeit einer Bezeichnung oder einer Beschreibung entfällt auf der GAMMA-Ebene, da hier die Beschreibung des Typs, wie er auf der BETA-Ebene vorgenommen wurde ausreichend ist. Die Eingabemaske 70 der GAMMA-Ebene präsentiert, wie im Beispiel der Figur 7 dargestellt, die Bezeichnungen 71 der Informationselemente des zuvor als Vorlage ausgewählten Informationselementesatzes β_{xyz} mit Angabe und geordnet nach dem Status 72 des entsprechenden Feldes. Die Eingabefelder 73 für die Eingabe der aktuellen Ausprägung 75 dieser Felder in einem aktuellen Informationselement der GAMMA-Ebene sind in optischer Beziehung zu deren Bezeichnungen gesetzt. Im Falle eines Referenzfeldes übernimmt eine Listbox 74 die Aufgabe des Eingabefeldes.

Vorteilhaft präsentieren die Eingabemasken weitere Informationen, wie z.B. ordnende (Statusreihenfolge 76) öder zuordnende (Statusangabe 72) Informationen, aber auch die Bezeichnungen 77 und/oder Beschreibungen der zur Vorlage gewählten Informationselemente übergeordneter Hierarchiestufen.

Die Vergabe der Attributwerte in die Hierarchiefelder erfolgt automatisch um zu verhindern, daß es zu Doppelbelegungen und damit unklaren Zuordnungen kommt. Die Attributwertvergabe kann beispielsweise über einen Zähler realisiert werden, der für jede Eingabe eines Informationselementesatzes einen einzigartigen Wert als Attribut für das interne Datenfeld "LFDNR" vergibt. Damit ist jede Sequenz der Datenbank eindeutig. Bei Anker-Informationselementen wird der Attributwert im Feld "LFDNR" in das entsprechende Hierarchiefeld übertragen.

Bei Anlage eines neuen DELTA-Elements besitzt daher dessen Anker-Informationselement den gleichen Wert im Hierarchiefeld "Delta" wie im internen Datenfeld "LFDNR". Ein Anker-Informationselement der ALPHA-Ebene weist gleiche Werte in den Feldern "Alpha" und "LFDNR", ein Anker-Informationselement der BETA-Ebene gleiche Werte in den Feldern "Beta" und "LFDNR" und ein Anker-Informationselement der GAMMA-Ebene gleiche Werte in den Feldern "Gamma" und "LFDNR" auf.

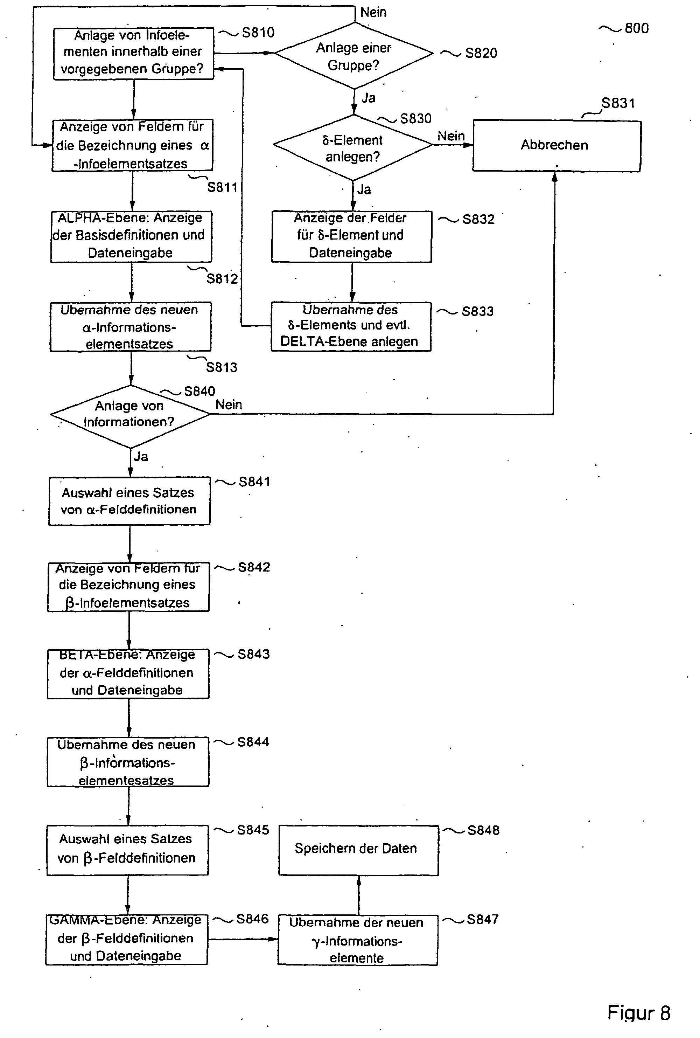

Eine Übersicht über eine erfindungsgemäße Verarbeitungslogik des Informationsmanagementprogramms gibt das vereinfachte Flußdiagramm 800 der Figur 8. Beginnend erfolgt in Schritt S810 die Abfrage, ob ein Element innerhalb einer vorgegebenen, also bereits existierenden Gruppe angelegt werden soll. Der Ausdruck 'Gruppe' bezieht sich in diesem Zusammenhang auf eine logischen Einheit, wie sie durch ein δ-Element, bestehend aus ein oder zwei Informationselementen der DELTA-Ebene gegeben ist. Bei Verneinung wird in Schritt S820 die Anlage einer Gruppe vorgeschlagen und bei Annahme des Vorschlags in Schritt S830 nachgefragt ob ein, bzw. ein neues δ-Element angelegt werden soll. Bei positiver Antwort werden in Schritt 832 die Felder für das δ-Element (Bezeichnung, evtl. Beschreibung) zum Ausfüllen angezeigt und im folgenden Schritt S833 schließlich das δ-Element übernommen, wobei für den Fall, daß es sich um das erste δ-Element der Datenbank handelt, gleichzeitig die DELTA-Ebene angelegt wird. Wird die Abfrage S830 verneint, so erfolgt der Abbruch des Eingabemodus in Schritt S831. Eine Verneinung der Abfrage S820 leitet direkt über zu Schritt S811, da die Verwendung einer Gruppe zur Anlage von Informationssätzen nicht zwingend erforderlich ist. Nach Anlage des δ-Elementes beginnt die Verarbeitungslogik wieder in Schritt S810, wonach in Schritt S811 Felder zur Eingabe einer Bezeichnung und/oder Beschreibung eines Informationselementesatzes der ALPHA-Ebene angezeigt werden. In Schritt S812 werden die Ausprägungen der Basisfelddefinitionen zu diesem Informationselementesatz in Form von einem oder mehreren Informationselementen eingegeben. Die Übernahme der hiermit vorgenommenen Alpha-Definitionen von Informationselementen der BETA-Ebene erfolgt in Schritt 813.

Nach einer Abfrage S840 ob weitere Informationen angelegt werden sollen (Verneinung führt zum Abbruch S831 des gegenwärtigen Eingabemodus) kann in Schritt S841 ein Informationselementesatz der Alpha-Ebene ausgewählt werden. In Schritt S842 werden Felder zur Eingabe einer Bezeichnung und/oder Beschreibung eines Informationselementesatzes der BETA-Ebene angezeigt. Im folgenden Schritt S843 werden die ausgewählten Alpha-Definitionen und die Ausprägungen der β-Informationselemente vorgenommen. Anschließend erfolgt die Übernahme des neuen Informationselementesatzes der BETA-Ebene in Schritt S844.

Die Eingabe von Informationselementen in die GAMMA-Ebene beginnt in Schritt S845 mit der Auswahl einer gewünschten Beta-Definition, also der Felddefinitionen wie sie in einem bestimmten β-Informationselementesatz festgelegt wurden. Die Eingabe von Bezeichnungen und/oder Beschreibungen wie in der ALPHA- wie BETA-Ebene entfällt, doch analog zur weiteren Dateneingabe in diesen Hierarchiestufen werden nun in Schritt 846 auf Basis der ausgewählten Beta-Definitionen die Ausprägungen eines oder mehrerer γ-Informationselemente eingegeben. Die Übernahme dieser Daten erfolgt in Schritt 847 und im letzten Schritt werden schließlich alle erzeugten Daten abgespeichert.

Das Informationsmanagementprogramm gestattet den Zugriff auf sämtliche Informationselemente der BETA-, GAMMA- und DELTA-Ebene. Durch Angabe eines bezeichnenden und/oder beschreibenden Elements der DELTA-Ebene, eines Informationselementesatzes der ALPHA-Ebene, Informationselementesatzes der BETA-Ebene oder eines Informationselementes oder eines Teils eines Informationselementes können alle relevanten gespeicherten Informationen gefunden und ausgegeben werden.

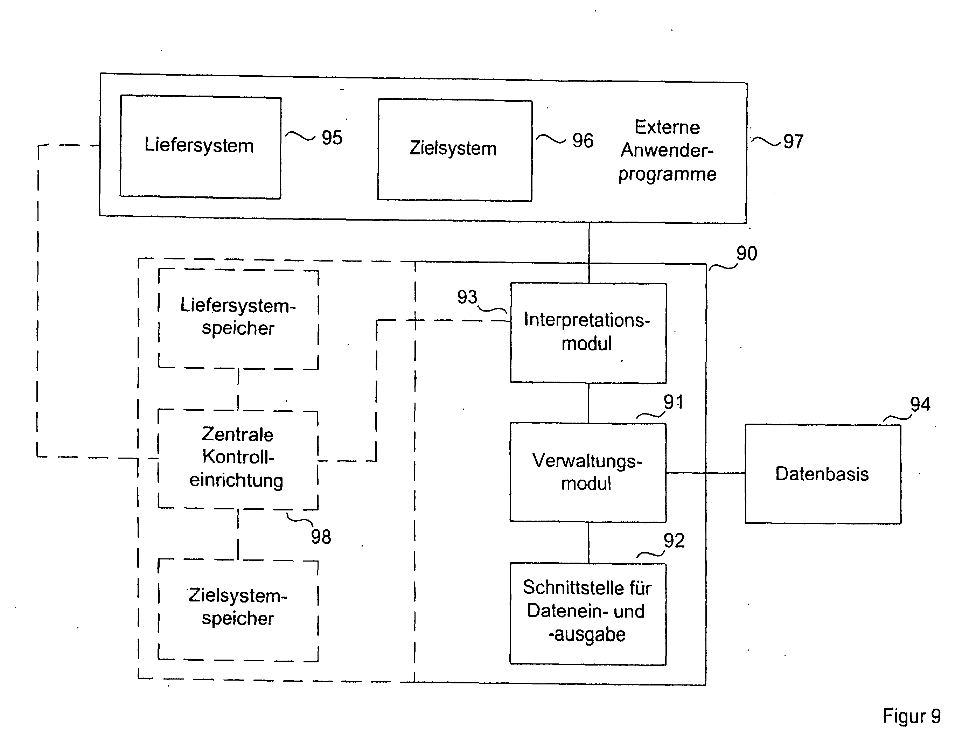

Das Blockdiagramm der Figur 9 zeigt die Basiskomponenten des erfindungsgemäßen Informationsmanagementprogramms 90. Aufgabe des Verwaltungsmoduls 91 ist die Steuerung der Datenablage in einer Datenbasis 94 entsprechend den Erfordernissen der Datenbank und das Bereitstellen von Zugriffen auf diese Datenbasis. Das Bereitstellen von Masken zur Eingabe von Daten und zum Erstellen von Abfragen ist über die Schnittstelle 92 zur Ein-/Ausgabe von Daten realisiert. Die Schnittstelle zu Anwenderprogrammen, die auf die Daten der Datenbank zugreifen bildet das Interpretationsmodul 93. Sie ermöglicht es Datenbanknutzern, wie z.B. Anwenderprogrammen auf die Daten ohne Kenntnis von Strukturen und Feldattributen bzw. der Systematik der Datenbank zuzugreifen. Die geforderten Daten werden von dem Interpretationsmodul 93 entweder zusammen mit den Felddefinitionen an das Anwenderprogramm oder entsprechend den Anforderungen des Anwenderprogramms formatiert an dieses übermittelt. Umgekehrt, kann das Interpretationsmodul über ihr zugewiesene Daten Strukturschablonen, d.h. Felddefinitionen legen und damit selbst Feldinhaltszuordnungen und Feldinhaltsübertragungen vornehmen, ohne sich mit den einzelnen Anwendungen auseinander setzen zu müssen.

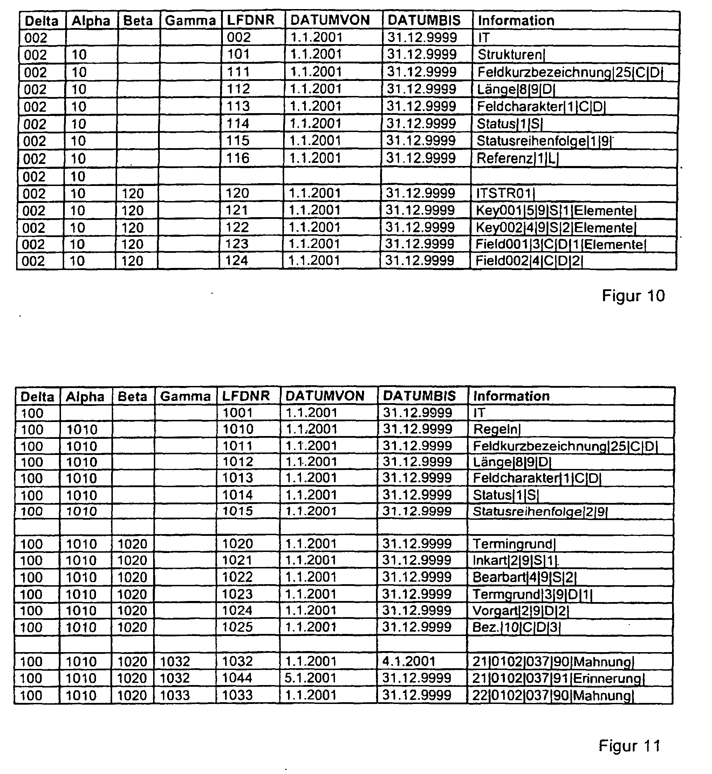

Basis dieser Umsetzung von Datenstrukturen ist die Ablage einer Interpretationsstruktur in der Datenbank selbst. Ein Beispiel hierfür ist in der Figur 10 gegeben. Die verfügbaren Interpretationsstrukturen sind unter dem Element "IT" der DELTA-Ebene zusammengefaßt. Auf der ALPHA-Ebene werden die für die Umsetzung notwendigen Strukturelemente definiert und auf der BETA-Ebene finden sich die Strukturdefinitionen.

Die Umsetzung der Datenstrukturen erfolgt nach Zuweisungsregeln, die selbst wiederum in der Datenbank abgespeichert werden. Dies ist möglich, da sich die Parameter der Regeln als Elemente einer Datenbank darstellen lassen. Die Figur 11 gibt ein Beispiel für eine solche Ablage von Zuweisungsregeln. Wie zuvor die Interpretationsstruktur selbst, sind auch die Zuweisungsregeln unter dem Element "IT" der DELTA-Ebene zusammengefaßt. In der ALPHA-Ebene werden die zum Festlegen der Regeln notwendigen Grundelemente definiert. Die Informationselemente der BETA-Ebene setzen die Formate für die Felder einer Zuweisungsregel, und darauf aufbauend enthält jedes Informationselement der GAMMA-Ebene eine Zuweisungsregel in Form eines Parametersatzes.

Im Beispiel der Figur 11 wird die zeitliche Referenzierung der Informationselemente benutzt um die Gültigkeit einer Dokumentenart einzuschränken. Im Informationselementesatz "1032" beendet die "Mahnung" ihre Gültigkeit mit dem 4.1.2001 und wird mit Beginn des 5.1.2001 von der "Erinnerung" abgelöst. Darüberhinaus können z.B. Referenzen in einem Informationselement der GAMMA-Ebene verwendet werden um Folgeregeln festzulegen.

Die Kommunikation zwischen einem Anwenderprogramm und dem Interpretationsmodul ist auf das Erteilen von Aufträgen an das Interpretationsmodul aufgebaut. Ein Auftrag enthält zumindest Angaben über seine Art, die umzusetzenden Quelldaten, das System vom dem diese Quelldaten stammen, in anderen Worten eine Bezeichnung des Liefersystems sowie eine Bezeichnung des Zielsystems und eine Ausgabestelle für die Zielinformation.

Die Datenbank kann hierbei selbst das Liefer- und/oder Zielsystem beherbergen, doch auch externe Datenbanken kommen als Liefer- wie als Zielsysteme in Frage. Speziell im letzteren Fall übernimmt das Interpretationsmodul z.B. die Umsetzung, Umrechnung und Transformation von Daten und Datenstrukturen verschiedener Datenherkünfte und anderer Informationen, so daß ein Anwenderprogramm Daten zwischen verschiedenen Datenverarbeitungseinrichtungen austauschen kann ohne deren Strukturen zu kennen.

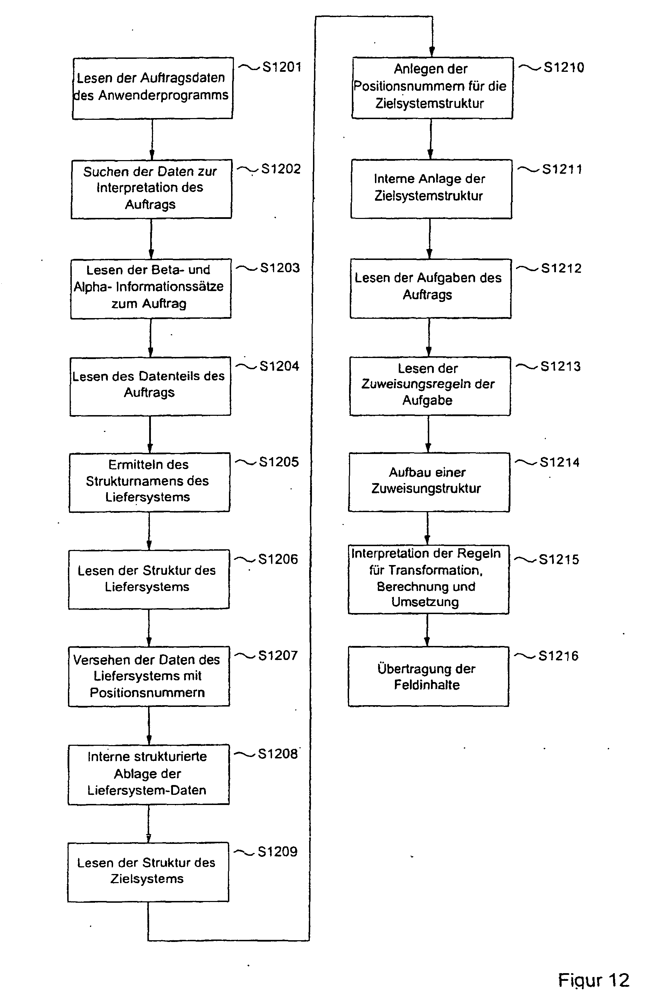

Das Ablaufschema des Interpretationsmoduls ist im Flußdiagramm der Figur 12 dargestellt. Zuerst werden die Auftragsdaten des Anwenderprogramms im Schritt S1201 gelesen. Die Auftragsdaten enthalten einen Schlüssel, der die Art des Auftrags, z.B. einen Transformationsservice angibt. Auf der Basis dieses Schlüssels sucht das Interpretationsmodul die Daten zur Interpretation der Auftragsdaten in der Datenbank im Schritt S1202. Im folgenden Schritt S1203 werden diese als zum Schlüssel gehörige Informationselementsätze in der BETA-Ebene und ALPHA-Ebene ausgelesen und damit schließlich in Schritt S1204 der Datenteil des Auftrags, der die näheren Angaben zum Auftrag enthält, interpretiert. Aus diesen Angaben ermittelt das Interpretationsmodul in Schritt S1205 den Strukturnamen des Liefersystems sowie eventuell die Art der Dateiöffnung. Mit der Kenntnis des Strukturnamens kann nun das Einlesen der Strukturen des Liefersystems, wie sie beispielsweise in der Figur 10 dargestellt ist, aus der Datenbank in Schritt S1206 vorgenommen werden. Zur sicheren Identifikation der Daten des Liefersystems erhalten diese eine Positionsnummer in Schritt S1207. Die Länge der Positionsnummern wird aus einem Längenfeld ausgelesen, d.h. aus einem Datenelement das eine Ausprägung eines Feldes für die Längenangabe ist. Im folgenden Schritt S1208 werden die Daten des Liefersystems intern entsprechend der Struktur der Datenbank abgelegt, wobei passende, d.h. die Struktur des Liefersystems wiedergebende Informationselementesätze auf der ALPHA-Ebene wie auf der BETA-Ebene aufgebaut werden.

Analog erfolgt nun das Einlesen der Strukturen des Zielsystems aus der Datenbank in Schritt S1209, wobei auch hier die Ausgabedaten eine Positionsnummern entsprechend den Angaben in den Längenfeldern in Schritt S1210 erhalten. Der Aufbau einer Struktur in der Datenbank zur Aufnahme der Ausgabedaten, also der Daten für das Zielsystem in Schritt 1211 beinhaltet ebenso wie in Schritt S1208 die Anlage passender Informationslementesätze auf der ALPHA-Ebene wie auf der BETA-Ebene.

Im nächsten Schritt S1212 werden die Auftragsaufgaben gelesen. Die Zuweisungsregeln (siehe z.B. Figur 11) entsprechend dieser Aufgaben werden daraufhin in Schritt S 1213 aus der Datenbank ausgelesen und in Schritt S1214 in einer internen Struktur bestehend aus Informationselementesätzen auf ALPHA-, BETA- und GAMMA-Ebene abgelegt. Im nächsten Schritt S1215 erfolgt die Interpretation der Regeln für die Transformation, Berechnung oder Umsetzung anhand der Feldtypen und schließlich die Übertragung der Feldinhalte von der Input-Struktur in die Output-Struktur in Schritt S1216. Aufgaben, die ein Auftrag nicht enthält, bleiben unausgeführt.

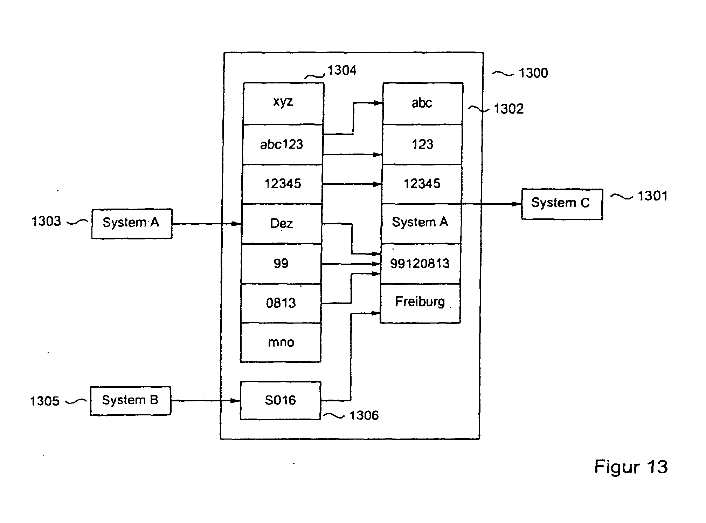

Ein Beispiel eines Auftrags an das Interpretationsmodul ist ein Transformationsservice. Der Transformationsservice entbindet die miteinander kommunizieren Datenbanksysteme von der Notwendigkeit für jedes Partnersystem eine eigene Schnittstelle zu erstellen. Statt dessen werden die erforderlichen Daten über den Transformationsservice des Interpretationsmoduls angefordert und in der systemeigenen Struktur erhalten. Das Interpretationsmodul übernimmt den Informationsaustausch und gleichzeitig die Übersetzung von Lieferinhalten in Zielinhalte. Dies ist schematisch in der Figur 13 dargestellt. Ein Zielsystem, System C 1301 fordert Daten von zwei Liefersystemen, System A 1303 und System B 1305 über das Interpretationsmodul an. Die Strukturen der Liefersysteme 1304 und 1306 und des Zielsystems 1302 werden intern entsprechend der Systematik der Datenbank nachgebildet. Gemäß den Zuweisungsregeln werden nun die Feldinhalte der Liefersysteme in die Struktur des Zielsystems übertragen. Dabei kann zum einen die Reihenfolge der Felder verändert, aber auch der Datentyp eines Feldes geändert werden. Auch müssen nicht alle Feldinhalte übertragen werden, und ferner kann der Inhalt eines Feldes eines Liefersystems aufgespalten und jeder Teil davon in ein eigenes Feld des Zielsystems überführt werden. Umgekehrt kann auch der Inhalt mehrerer Felder der Liefersysteme in einem Feld des Zielsystems zusammengeführt werden. Die Zuweisungsregeln können darüber hinaus auch Anweisungen zur Interpretation eines Feldinhalts enthalten, wobei das Ergebnis der Interpretation dann in ein Feld des Zielsystems geschrieben wird.

An dieser Stelle sei vermerkt, daß die beschriebene Transformation nur ein ausgewähltes Beispiel zur Illustration der Funktionsweise des Interpretationsmoduls ist. Weitere Anwendungsfunktionen sind beispielsweise u.a. das Speichern und Interpretieren von Daten zur Programmsteuerung ohne Programmierung, die Ablage und Interpretation sowie Ausgabe von Informationen aller gängigen Formate, die Ablage von Prüfungen externer Programme, regelbasierende Steuerungen von Programmabläufen (Workflow) ohne Programmierung.

In einer bevorzugten Ausführungsform der vorliegenden Erfindung wird die beschriebene Dienstleistung des Interpretationsmoduls 93 mit Hilfe einer zentralen Kontrolleinrichtung 98 zu einem anforderungsorientierten Schnittstellen-Kontrollsystem ausgebaut, so daß eine Client-Server-Client-Kommunikation realisiert werden kann. Die zentrale Kontrolleinrichtung 98 kann selbständig lauffähig, aber nicht funktionell unabhängig vom erfindungsgemäßen Informationsmanagementprogramm 90 realisiert sein. Die Kommunikation der zentralen Kontrolleinrichtung 98 mit dem Verwaltungsmodul 91 des Informationsmanagementprogrammes 90 erfolgt über das Interpretationsmodul 93. Andererseits kann das Informationsmanagementprogramm 90 mit der erfindungsgemäßen Datenbank unabhängig von der zentralen Kontrolleinrichtung 98 im Sinne einer Peer-to-Peer-Kommunikation arbeiten.

Aufgabe der zentralen Kontrolleinrichtung 98 ist die Steuerung von Aufträgen aus Liefersystemen 95 oder Zielsystemen 96 an das Informationsmanagementprogramm 90, wobei die Bearbeitung eines Auftrags in der oben beschriebenen Art und Weise von dem Interpretationsmodul 93 vorgenommen wird. Die zentrale Kontrolleinrichtung 98 bedient sich des Interpretationsmoduls 93 und der in der Datenbasis gespeicherten Regeln und Strukturinformationen zur Steuerung der Aufträge aus verschiedensten Systemen. Über die zentrale Kontrolleinrichtung 98 können unterschiedliche Systeme 95 und 96 mit unterschiedlichen Anforderungen und die mit unterschiedlichen Datenformaten operieren miteinander kommunizieren bzw. Daten austauschen, da diese Einrichtung 98 eine Entkoppelung der Kommunikation bewirkt indem sie die Abstimmung der Aufträge aus den verschiedenen Systemen übernimmt.

Anhand vorgegebener und in der Datenbasis vorrätig gehaltener Regeln übernimmt die zentrale Kontrolleinrichtung 98 über das Interpretationsmodul 93 die Prüfung der Daten eines Liefersystems auf ihre Richtigkeit, respektive Integrität. Felder für das Zielsystems können bei Bedarf direkt mittels des Interpretationsmoduls 93 von der zentralen Kontrolleinrichtung 98 auf Basis von Informationen des Liefersystems gefüllt werden. Die zentrale Kontrolleinrichtung kann darüber hinaus auch Felder für das Zielsystem füllen ohne auf Feldinhalte der Liefersysteme zurückzugreifen. Beispiele hierfür sind u.a. das Einfügen einer transformationsrelevanten Information wie z.B. einer laufenden Nummer, oder das Einfügen von Werten, die auf dem Zielsystem einen 'Division by Zero' Fehler vermeiden helfen.

Enthält ein Auftrag einen bestimmten Bearbeitungstermin, so übernimmt die zentrale Kontrolleinrichtung die Überwachung dieses Termins und bewirkt die termingerechte Ausführung des Auftrags. Aufträge ohne expliziten Bearbeitungstermin werden zum nächstmöglichen Zeitpunkt ausgeführt. Damit kann eine Akquisition von Lieferdaten zu verschiedenen Zeiten von verschiedenen oder auch vom selben Liefersystem vorgenommen werden, ebenso wie die Weitergabe der umgesetzten Daten an das Zielsystem zu einem weiteren Zeitpunkt erfolgen kann. Die Kommunikation zwischen den Systemen läßt sich somit unabhängig von der Laufzeit beider Systeme organisieren Auf Wunsch erhalten die Systeme Rückmeldungen über den Bearbeitungszustand der gesendeten Aufträge, die z.B. genutzt werden können um auf Verarbeitungsinformationen der Zielsysteme zurückzugreifen.

Eine lückenlose Dokumentation aller Vorgänge ist durch die mitgeführte Kontrollstatistik gegeben. Jeder einzelne Teilvorgang wird aufgezeichnet und ist dadurch jederzeit nachvollziehbar.

Das beschriebene Verfahren erlaubt es eine Vielzahl unterschiedlicher Datenstrukturen auf einfache Weise auf allen Systemen und Plattformen ohne konventionelle Datenbank zu erstellen. Die Datenhaltung enthält in sich die Definition der Felder und Datenstrukturen. Daher kann in Anwenderprogrammen, die auf die Daten der Datenbank zugreifen weitgehend auf diese strukturellen Definitionen verzichtet werden. Benötigt ein Anwenderprogramm jedoch die Struktur selbst, so kann auch diese von der Datenbank angefordert werden. Das Interpretationsmodul bietet mit den in der Datenbank abgelegten Strukturinformationen und Zuweisungsregeln Anwenderprogrammen die Möglichkeit, Daten aus anderen Datenbanksystemen anzufordern ohne die Struktur dieser Systeme zu kennen. Die zentrale Kontrolleinrichtung gewährleistet darüber hinaus die Kommunikation zwischen vielfältigen Liefer- und Empfängermedien. Die Datenbasis der Datenbank kann im einfachsten Fall als Flatfile-Datenbank mit der Metastruktur als Tabelle ausgeführt werden, die Daten können jedoch auch auf mehrere Dateien verteilt abgelegt werden.

## Patentansprüche

1. Datenbank (100) zur Aufnahme von Informationen in Form beliebig strukturierter Datensätze in zumindest einer Speichereinrichtung einer oder mehrerer Datenverarbeitungseinrichtungen mit Hierarchiestufen (119, 129), wobei
- eine übergeordnete Hierarchiestufe (119) Informationselemente (111, 112, 113) zur Definition eines Aufbaus von Informationselementen (130, 140, 150) einer untergeordneten Hierarchiestufe (129) enthält und
- eine untergeordnete Hierarchiestufe (129) Informationselemente (130, 140, 150) in einer Ausprägung (131-136, 141-146, 151-156) gemäß eines Aufbaus enthält, der zumindest von einem Informationselement (111, 112, 113) der übergeordneten Hierarchiestufe definiert ist,
- eine erste Hierarchiestufe (21) Informationselemente zur Definition des Aufbaus von Informationselementen einer zweiten Hierarchiestufe (22) enthält,
- eine zweite Hierarchiestufe (22) Informationselemente zur Definition des Aufbaus von Informationselementen einer dritten Hierarchiestufe (23) enthält, und
- eine dritte Hierarchiestufe (23) Informationselemente zur Aufnahme von Informationen enthält
**dadurch gekennzeichnet,**
**dass** die Datenbank eine Verknüpfungsstruktur (24) mit Datenfeldern enthält, die den Informationselementen zugeordnet sind und welche die Informationselemente auf den verschiedenen Hierarchiestufen verbinden, wobei
- jedem Informationselement in der Verknüpfungsstruktur ein erstes, zweites, drittes und viertes internes Datenfeld (31, 32, 33, 36) zugeordnet ist,
- die Verknüpfungsstruktur (24) in einem ersten internen Datenfeld (31) ein erstes Attribut zur eindeutigen Zuordnung eines Informationselementes zu einem Informationselement oder einem Satz von Informationselementen der ersten Hierarchiestufe (21), in einem zweiten internen Datenfeld (32) ein zweites Attribut zur eindeutigen Zuordnung eines Informationselementes zu einem Informationselement oder einem Satz von Informationselementen der zweiten Hierarchiestufe (22), in einem dritten internen Datenfeld (33) ein drittes Attribut zur eindeutigen Zuordnung eines Informationselementes zu einem Satz von Informationselementen der dritten Hierarchiestufe (23) enthält,
- ein viertes internes Datenfeld (36) der Verknüpfungsstruktur für die Aufnahme eines Informationselementes vorgesehen ist, und
- die Verknüpfungsstruktur (24) in den Datenfeldern, die einem Informationselement einer untergeordneten Hierarchiestufe zugeordnet sind, eine eindeutige Angabe eines Informationselementes oder Satzes von Informationselementen einer übergeordneten Hierarchiestufe mit der Definition des Aufbaus des genannten Informationselementes der untergeordneten Hierarchiestufe enthält.

2. Datenbank nach Anspruch 1,
**dadurch gekennzeichnet,**
**dass** in einem Grundbaustein eine Definition des Aufbaus von Informationselementen der ersten Hierarchiestufe (21) vorgebbar ist.

3. Datenbank nach Anspruch 1 oder 2,
**gekennzeichnet durch**
eine Ordnungsstufe (25) zur Gruppierung von Elementen der ersten Hierarchiestufe (21) und/oder Elementen der zweiten Hierarchiestufe (22).

4. Datenbank nach Anspruch 3,
**dadurch gekennzeichnet,**
**dass** in einem fünften internen Datenfeld (34) ein viertes Attribut zur eindeutigen Zuordnung eines Informationselementes zu einem Informationselement oder einem Satz von Informationselementen der Ordnungsstufe (25) enthalten ist.

5. Datenbank nach einem der Ansprüche 1 bis 4,
**dadurch gekennzeichnet**
**dass** der Aufbau der Verknüpfungsstruktur (24) über die Kombination der Werte der ersten, zweiten und dritten Attribute, bei Existenz einer Ordnungsstufe zusätzlich über die Werte des vierten Attributs gegeben ist.

6. Datenbank nach einem der Ansprüche 1 bis 5,
**dadurch gekennzeichnet**
**dass** jedem Informationselement in einem sechsten internen Datenfeld (35) der Verknüpfungsstruktur ein fünftes Attribut zur eindeutigen Identifizierung zugeordnet ist.

7. Datenbank nach einem der Ansprüche 1 bis 6,
**dadurch gekennzeichnet**
**dass** jedem Informationselement ein Zeitwert zur Bestimmung seiner zeitlichen Referenzierung zugeordnet ist.

8. Datenbank nach Anspruch 7,
**dadurch gekennzeichnet**
**dass** sich die zeitliche Referenzierung aus einem initialen Wert und einem finalen Wert zusammensetzt.

9. Datenbank nach Anspruch 8,
**dadurch gekennzeichnet**
**dass** initialer Wert und finaler Wert der zeitlichen Referenzierung in internen Datenfeldern (37, 38) der Verknüpfungsstruktur aufgenommen werden.

10. Datenbank nach einem der Ansprüche 7 bis 9,
**dadurch gekennzeichnet**
**dass** ein Verändern eines Informationselementes folgende Schritte aufweist:
- Erzeugen eines neuen Informationselementes als Kopie des zu verändernden Informationselementes,
- Verändern des neuen Informationselementes, und
- Zuweisen einer neuen zeitlichen Referenz an das neue Informationselement.

11. Datenbank nach einem der Ansprüche 1 bis 10
**dadurch gekennzeichnet,**
**dass** die Zuordnung eines Informationselementes zu einer Hierarchiestufe aus der Existenz und/oder den Werten der Attribute in den ersten, zweiten und dritten internen Datenfeldern der Verknüpfungsstruktur gegeben ist, und bei Existenz einer Ordnungsstufe zusätzlich aus der Existenz und/oder dem Wert des Attributs im fünften internen Datenfeld (34) der Verknüpfungsstruktur (24).

12. Datenbank nach einem der Ansprüche 1 bis 11,
**dadurch gekennzeichnet**
**dass** die in einem Informationselement oder einem Satz von Informationselementen der ersten Hierarchiestufe (21) festgelegten Definitionen die Vorgabe für die Ausprägung eines Informationselementes der zweiten Hierarchiestufe (22) mit identischem Wert des Attributes im ersten internen Datenfeld (31) der Verknüpfungsstruktur, und
die in einem Informationselement oder einem Satz von Informationselementen der zweiten Hierarchiestufe (22) festgelegten Definitionen die Vorgabe für die Ausprägung eines Informationselementes der dritten Hierarchiestufe (23) mit identischem Wert des Attributes im zweiten internen Datenfeld (32) der Verknüpfungsstruktur bilden.

13. Datenbank nach einem der Ansprüche 1 bis 12,
**dadurch gekennzeichnet**
**dass** jeder Satz von Informationselementen ein Anker-Informationselement (39) aufweist, für das der Wert des Attributs in dem seine Zuordnung zu einer Hierarchiestufe bezeichnenden internen Datenfeld (31, 32, oder 33) der Verknüpfungsstruktur identisch ist mit dem Wert des Attributs in dem ihm zugeordneten sechsten internen Datenfeld (35) der Verknüpfungsstruktur.

14. Datenbank nach einem der Ansprüche 1 bis 13,
**dadurch gekennzeichnet**
**dass** jeder Satz von Informationselementen, der nicht der dritten Hierarchiestufe (23) angehört, zumindest ein Informationselement mit einem, diesen Satz von Informationselementen beschreibenden Inhalt aufweist.

15. Datenbank nach Anspruch 14,
**dadurch gekennzeichnet**
**dass** eines dieser Informationselemente mit beschreibendem Inhalt das Anker-Informationselement (39) ist.

16. Verfahren zum Aufbau und zur Verwaltung einer Datenbasis gemäß einer Datenbank nach einem der Ansprüche 1 bis 15, mit Schritten zum Anlegenden Hierarchiestufen, zur Anlage von Informationselementen innerhalb der Hierarchiestufen und Schritten zum Herstellen von Verknüpfungen zwischen Informationselementen auf verschiedenen Hierarchiestufen.

17. Verfahren nach Anspruch 16,
**dadurch gekennzeichnet,**
**dass** mehrere, eigenständige Datenbasen zu einer Datenbasis logisch zusammenfasst werden.

18. Verfahren nach Anspruch 16 oder 17,
**dadurch gekennzeichnet,**
**dass** eine Interpretation von Datensätzen aus einem Liefersystem extern zur Datenbasis anhand von Datenstrukturinformation über das Liefersystem erfolgt, die in Form von einem oder mehreren Informationselementen in der Datenbasis abgelegt ist.

19. Verfahren nach einem der Ansprüche 16, 17 oder 18,
**dadurch gekennzeichnet,**
**dass** eine Strukturierung von Datensätzen für die Ausgabe an ein Zielsystem extern zur Datenbasis auf der Basis einer Datenstrukturinformation über das Zielsystem erfolgt, die in Form von einem oder mehreren Informationselementen in der Datenbasis abgelegt ist.

20. Verfahren nach einem der Ansprüche 16 bis 19,
**dadurch gekennzeichnet,**
**dass** eine Übertragung von Datensätzen aus einer ersten Struktur in eine zweite Struktur nach Zuweisungsregeln erfolgt, die in Form von einem oder mehreren Informationselementen in der Datenbasis abgelegt sind.

21. Verfahren nach einem der Ansprüche 16 bis 20,
**dadurch gekennzeichnet,**
**dass** eine Kommunikation von Anwendungsprogrammen mit der Datenbank in Form von Aufträgen an die Datenbank erfolgt.

22. Verfahren nach Anspruch 21,
**dadurch gekennzeichnet,**
**dass** ein Auftrag an die Datenbank zumindest Angaben über die Art des Auftrags aufweist.

23. Verfahren nach Anspruch 21 oder 22,
**dadurch gekennzeichnet,**
**dass** eine Steuerung von Aufträgen aus Anwendungsprogrammen an die Datenbank mittels einer zentralen Kontrolleinrichtung (98) erfolgt.

24. Verfahren nach Anspruch 23,
**dadurch gekennzeichnet,**
**dass** die zentrale Kontrolleinrichtung (98) eine Prüfung der Integrität von Daten aus einem Auftrag anhand von Regeln vornimmt, die in Form von einem oder mehreren Informationselementen in der Datenbasis der Datenbank abgelegt sind.

25. Verfahren nach Anspruch 23 oder 24,
**dadurch gekennzeichnet,**
**dass** ein Auftrag an die Datenbank einen Bearbeitungstermin aufweist und die zentrale Kontrolleinrichtung (98) die Ausführung des Auftrags zum Bearbeitungstermin bewirkt.

26. Verfahren nach Anspruch 23, 24 oder 25,
**dadurch gekennzeichnet,**
**dass** die zentrale Kontrolleinrichtung (98) Teilaufträge zumindest zweier Anwendungsprogramme, wobei die Teilaufträge zusammen einen gemeinsamen Auftrag an die Datenbank bilden, unabhängig voneinander entsprechend den Erfordernissen eines jeden Teilauftrags ausführt.

27. Verfahren nach einem der Ansprüche 23 bis 26,
**dadurch gekennzeichnet,**
**dass** die zentrale Kontrolleinrichtung (98) ein Anwendungsprogramm über den Stand der Ausführung eines Auftrags informiert.

28. Verfahren nach einem der Ansprüche 23 bis 27,
**dadurch gekennzeichnet,**
**dass** die zentrale Kontrolleinrichtung (98) auf Basis von Informationen der Datenbank zusätzliche Daten erstellt.

29. Informationsmanagementprogramm (90), zur Ausführung auf einer oder mehreren Datenverarbeitungseinrichtungen mit Einrichtungen zur Durchführung eines Verfahrens gemäß einem der Ansprüche 16 bis 28.

30. Vorrichtung zur Aufnahme und Verwaltung von Informationen in Form beliebig strukturierter Datensätze mit
- zumindest einer Datenverarbeitungsanlage, die mit einem Informationsmanagementprogramm (90) gemäß Anspruch 29 eingerichtet ist, und
- zumindest einer Speichereinrichtung für die Aufnahme der, von dem Informationsmanagementprogramm (90) verwalteten Datenbasis.

31. Vorrichtung nach Anspruch 30,
**dadurch gekennzeichnet,**
**dass** das Informationsmanagementprogramm (90) und die vom Informationsmanagementprogramm verwaltete Datenbasis auf verschiedenen Datenverarbeitungseinrichtungen eingerichtet sind.

32. Vorrichtung nach Anspruch 30 oder 31,
**dadurch gekennzeichnet,**
**dass** zumindest eine Datenverarbeitungsanlage der Vorrichtung über eine Netzwerkverbindung Daten austauscht.

33. Vorrichtung nach Anspruch 30, 31 oder 32,
**dadurch gekennzeichnet,**
**dass** zumindest eine Datenverarbeitungsanlage der Vorrichtung über ein öffentliches Netzwerk zugänglich ist.

## Claims

1. Database (100) for receiving information in the form of arbitrarily structured data sets in at least one storage device of one or more data processing devices, having hierarchy levels (119, 129), whereby
- a superior hierarchy level (119) contains information elements (111, 112, 113) for a definition of the structure of information elements (130, 140, 150) of a subordinate hierarchy level (129), and
- a subordinate hierarchy level (129) contains information elements (130, 140, 150) in an instantiation (131-136, 141-146, 151-156) in accordance with a structure which is defined by at least one information element (111, 112, 113) of the superior hierarchy level,
- a first hierarchy level (21) contains information elements for the definition of the structure of information elements of a second hierarchy level (22),
- a second hierarchy level (22) contains information elements for the definition of the structure of information elements of a third hierarchy level (23),
- a third hierarchy level (23) contains information elements for receiving information, and
**characterised in that**
the data base contains a link structure (24) with data fields which are associated with the information elements and which connect the information elements on different hierarchy levels, whereby
- with each information element in the link structure is associated a first, second, third, and fourth internal data field (31, 32, 33, 36),
- the link structure (24) contains in a first internal data field (31) a first attribute for the unique association of an information element with an information element or with a set of information elements of the first hierarchy level (21), in a second internal data field (32) a second attribute for the unique association of an information element with an information element or with a set of information elements of the second hierarchy level (22), in a third internal data field (33) a third attribute for the unique association of an information element with a set of information elements of the third hierarchy level (23),
- a fourth internal data field (36) of the link structure is provided for a reception of an information element, and
- the link structure (24) contains in the data fields which are associated with an information element of a subordinate hierarchy level a unique indication of an information element or of a set of information elements of a superior hierarchy level containing the definition of the structure of the said information element of the subordinate hierarchy level.

2. Database according to claim 1,
**characterised in that**,
in a basic foundation a definition of the structure of information elements of the first hierarchy level (21) is effected.

3. Database according to claim 1 or 2,
**characterised by**
an ordering level (25) for the grouping of elements of the first hierarchy level (21) and/or elements of the second hierarchy level (22).

4. Database according to claim 3,
**characterised in that**,
a fifth internal data field (34) contains a fourth attribute for the unique association of an information element with an information element or with a set of information elements of the ordering level (25).

5. Database according to any of claims 1 to 4,
**characterised in that**,
the build-up of the link structure (24) is provided by the combination of the values of the first, second and third attributes, and in the case of the existence of an ordering level, additionally through the value of the fourth attribute.

6. Database according to any of claims 1 to 5,
**characterised in that**,
in a sixth internal data field (35) of the link structure, a fifth attribute for a unique identification is associated with each information element.

7. Database according to any of claims 1 to 6,
**characterised in that**,
there is associated with each information element a time value for determining its temporal referencing.

8. Database according to claim 7,
**characterised in that**,
the temporal referencing is assembled of an initial value and a final value.

9. Database according to claim 8,
**characterised in that**,
the initial value and final value of the temporal referencing are taken into internal data fields (37, 38) of the link structure.

10. Database according to any of claims 7 to 9,
**characterised in that**,
an alteration of an information element involves the following steps:
- generation of a new information element as a copy of the information element to be altered,
- alteration of the new information element, and
- allocation of a new temporal referencing to the new information element.

11. Database according to any of claims 1 to 10,
**characterised in that**,
the allocation of an information element to a hierarchy level is determined from the existence and/or the values of the attributes in the first, second, and third internal data fields of the link structure, and if an ordering level exists, further from the existence and/or the value of the attribute in the fifth internal data field (34) of the link structure (24).

12. Database according to any of claims 1 to 11,
**characterised in that**,
the definitions determined in an information element or in a set of information elements of the first hierarchy level (21) form the template for the instantiation of an information element of the second hierarchy level (22) having an identical value of the attribute in the first internal data field (31) of the link structure, and
the definitions determined in a information element or in a set of information elements of the second hierarchy level (22) form the template for the instantiation of an information element of the third hierarchy level (23) having an identical value of the attribute in the second internal data field (32) of the link structure.

13. Database according to any of claims 1 to 12,
**characterised in that**,
each set of information elements has an anchor information element (39) for which the value of the attribute in its internal data field (31, 32, or 33) of the link structure designating its allocation to a hierarchy level is identical with the value of the attribute in the sixth internal data field (35) of the link structure associated therewith.

14. Database according to any of claims 1 to 13,
**characterised in that**,
each set of information elements which does not belong to the third hierarchy level (23) has at least one information element having a content descriptive of this set of information elements.

15. Database according to claim 14,
**characterised in that**,
one of these information elements having descriptive content is the anchor information element (39).

16. Method for setting-up and for administering a database in accordance with a database according to any of claims 1 to 15 comprising steps for establishing the hierarchy levels, for establishing information elements within the hierarchy levels, and steps for the production of links between information elements on different hierarchy levels.

17. Method according to claim 16,
**characterised in that**,
a plurality of individual databases are assembled to one logical database.

18. Method according to claim 16 or 17,
**characterised in that**,
an interpretation of data sets from a delivering system external to the database is effected on the basis of data structure information concerning the delivering system, which information is stored in the form of one or more information elements in the database.

19. Method according to any of claims 16, 17 or 18,
**characterised in that**,
a structuring of data sets for output to a target system external to the database is effected on the basis of data structure information concerning the target system, which information is stored in the form of one or more information elements in the database.

20. Method according to any of claims 16 to 19,
**characterised in that**,
a transfer of data sets from a first structure to a second structure is effected in accordance with allocation rules which are stored in the database in the form of one or more information elements.

21. Method according to any of claims 16 to 20,
**characterised in that**,
a communication of application programs with the database is effected in the form of requests to the database.

22. Method according to claim 21,
**characterised in that**,
a request to the database contains at least indications concerning the kind or nature of the request.

23. Method according to claim 21 or 22,
**characterised in that**,
a control of requests from application programs to the database is effected by means of a central control device (98).

24. Method according to claim 23,
**characterised in that**,
the central control device (98) undertakes a check of the integrity of data from a request on the basis of rules which are stored in the databank of the database in the form of one or more information elements.

25. Method according to claim 23 or 24,
**characterised in that**,
a request to the database has a processing dateline and the central control device (98) brings about the completion of the request by the processing dateline.

26. Method according to claim 23, 24 or 25,
**characterised in that**,
the central control device (98) carries out part requests of at least two application programs, the part requests together forming a common request to the database, independently of one another corresponding to the needs of each part request.

27. Method according to any of claims 23 to 26,
**characterised in that**,
the central control device (98) informs an application program about the state of processing of a request.

28. Method according to any of claims 23 to 27,
**characterised in that**,
the central control device (98) creates additional data on the basis of information in the database.

29. Information management program (90) for being executed on one or more data processing devices having means for carrying out a method in accordance with any of claims 16 to 28.

30. Apparatus for receiving and administering information in the form of arbitrarily structured data sets having at least one data processing facility being set-up with an information management program (90) according to claim 29, and,
at least one storage device for receiving the databank managed by the information management program (90).

31. Apparatus according to claim 30,
**characterised in that**,
the information management program (90) and the databank administered by the information management program are operated on different data processing devices.

32. Apparatus according to claim 30 or 31,
**characterised in that**,
at least one data processing facility of the apparatus exchanges data via a network connection.

33. Apparatus according to claim 30, 31 or 32,
**characterised in that**,
at least one data processing facility of the apparatus is accessible via a public network.

## Revendications

1. Banque de données (100) destinée à l'enregistrement d'informations sous forme de blocs de données d'une structure quelconque dans au moins un dispositif de mémoire d'un ou de plusieurs ordinateurs disposant de niveaux de hiérarchie (119,129),
- un niveau de hiérarchie supérieur (119) contenant des éléments d'information (111,112,113) pour la définition d'un ensemble d'éléments d'information (130,140, 150) d'un niveau de hiérarchie inférieur (129) et
- un niveau de hiérarchie inférieur (129) contenant des éléments d'information (130,140, 150) sous une forme (131-136, 141-146, 151-156) selon une structure définie au moins par un élément d'information (111,112,113) du niveau de hiérarchie supérieur,
- un premier niveau de hiérarchie (21) contenant des éléments d'information destinés à la définition de la structure d'éléments d'information d'un deuxième niveau de hiérarchie (22),
- un deuxième niveau de hiérarchie (22) contenant des éléments d'information destinés à la définition de la structure d'éléments d'information d'un troisième niveau de hiérarchie (22), et
- un troisième niveau de hiérarchie (23) contenant des éléments d'information destinés à l'enregistrement d'informations,
**caractérisée par le fait**
- **que** la banque de données contient une structure de liaison (24) avec des champs de données attribués aux éléments d'information et reliant les éléments d'information aux différents niveaux de hiérarchie,
- **qu'**un premier, deuxième, troisième et quatrième champ de données interne (31, 32, 33, 36) est attribué à chaque élément d'information dans la structure de liaison,
- **que** la structure de liaison (24) contenant dans un premier champ de données (31) un premier attribut pour l'attribution univoque d'un élément d'information à un élément d'information ou à un bloc d'éléments d'information du premier niveau de hiérarchie (21), dans un deuxième champ de données interne (32) un deuxième attribut pour l'attribution univoque d'un élément d'information à un élément d'information ou à un bloc d'éléments d'information du deuxième niveau de hiérarchie (22), dans un troisième champ de données interne (33) un troisième attribut pour l'attribution univoque d'un élément d'information à un bloc d'éléments d'information du troisième niveau de hiérarchie (23),
- **qu'**un quatrième champ de données interne (36) de la structure de liaison est prévu pour l'enregistrement d'un élément d'information, et
- **que** la structure de liaison (24) dans les champs de données attribués dans un élément d'information à un niveau de hiérarchie inférieur contient une indication univoque d'un élément d'information ou d'un bloc d'éléments d'information d'un niveau de hiérarchie supérieur définissant la structure de l'élément d'information mentionné du niveau de hiérarchie inférieur.

2. Banque de données selon la revendication 1,
**caractérisée par le fait**
**qu'**il est possible de définir dans un module de base la structure d'éléments d'information du premier niveau de hiérarchie (21).

3. Banque de données selon la revendication 1 ou 2,
**caractérisée par**
un niveau d'ordre (25) pour le groupement d'éléments du premier niveau de hiérarchie (21) et/ou d'éléments du deuxième niveau de hiérarchie (22).

4. Banque de données selon la revendication 3,
**caractérisée par le fait**
**qu'**un cinquième champ de données interne (34) contient un quatrième attribut pour l'attribution univoque d'un élément d'information à un élément d'information ou à un bloc d'éléments d'information du niveau d'ordre (25).

5. Banque de données selon une des revendications 1 à 4,
**caractérisée par le fait**
**que** la structure de liaison (24) est définie par la combinaison des valeurs des premiers, deuxièmes et troisièmes attributs, en présence d'un niveau d'ordre, également par les valeurs du quatrième attribut.

6. Banque de données selon une des revendications 1 à 5,
**caractérisée par le fait**
**qu'**un cinquième attribut est attribué à chaque élément d'information dans un sixième champ de données interne (35) de la structure de liaison pour l'identification univoque.

7. Banque de données selon une des revendications 1 à 6,
**caractérisée par le fait**
**qu'**une valeur temporelle est attribuée à chaque élément d'information pour déterminer son référencement temporel.

8. Banque de données selon la revendication 7,
**caractérisée par le fait**
**que** le référencement temporel se compose d'une valeur initiale et d'une valeur finale.

9. Banque de données selon la revendication 8,
**caractérisée par le fait**
**que** la valeur initiale et la valeur finale du référencement temporel sont enregistrées dans des champs de données internes (37, 38) de la structure de liaison.

10. Banque de données selon une des revendications 7 à 9,
**caractérisée par le fait**
**que** la modification d'un élément d'information s'effectue de la manière suivante :
- création d'un nouvel élément d'information comme copie de l'élément d'information à modifier,
- modification du nouvel élément d'information, et
- attribution d'une nouvelle référence temporelle au nouvel élément d'information.

11. Banque de données selon une des revendications 1 à 10,
**caractérisée par le fait**
**que** l'attribution d'un élément à un niveau de hiérarchie est définie par la présence et/ou les valeurs des attributs dans les premières, deuxièmes et troisièmes champs de données internes de la structure de liaison, et en présence d'un niveau d'ordre par la présence et/ou la valeur de l'attribut dans le cinquième champ de données interne (34) de la structure de liaison (24).

12. Banque de données selon une des revendications 1 à 11,
**caractérisée par le fait**
**que** les définitions fixées dans un élément d'information ou dans un bloc d'éléments d'information du premier niveau de hiérarchie (21) détermine la forme d'un élément d'information du deuxième niveau de hiérarchie (22) contenant la valeur identique de l'attribut dans le premier champ de données interne (31) de la structure de liaison, et les définitions fixées dans un élément d'information ou dans un bloc d'éléments d'information du deuxième niveau de hiérarchie (22) déterminent la forme d'un élément d'information du troisième niveau de hiérarchie (23) contenant la valeur identique de l'attribut dans le deuxième champ de données interne (32) de la structure de liaison.

13. Banque de données selon une des revendications 1 à 12,
**caractérisée par le fait**
**que** chaque bloc d'éléments d'information présente un élément d'information fixe (39), pour lequel la valeur de l'attribut dans le champ de données interne (31, 32 ou 33) de la structure de liaison désignant son attribution à un niveau de hiérarchie est identique à la valeur de l'attribut dans le sixième champ de données interne (35) de la structure de liaison qui lui est attribué.

14. Banque de données selon une des revendications 1 à 13,
**caractérisée par le fait**
**que** chaque bloc d'éléments d'information n'appartenant pas au troisième niveau de hiérarchie (23) présente au moins un élément d'information avec un contenu décrivant ce bloc d'éléments d'information.

15. Banque de données selon la revendication 14,
**caractérisée par le fait**
**que** l'un de ces éléments d'information avec le contenu descriptif est l'élément d'information fixe (39).

16. Méthode pour la création et la gestion d'une base de données conforme à une base de données selon une des revendications 1 à 15 avec des étapes pour la création des niveaux de hiérarchie, pour la création d'éléments d'information à l'intérieur des niveaux de hiérarchie et des étapes pour la création de liaisons entre les éléments d'information à différents niveaux de hiérarchie.

17. Méthode selon la revendication 16,
**caractérisée par le fait**
**que** plusieurs bases de données indépendantes sont réunies de manière logique dans une base de données.

18. Méthode selon la revendication 16 ou 17,
**caractérisée par le fait**
**qu'**une interprétation de blocs de données d'un système de livraison s'effectue à l'extérieur de la base de données au moyen d'une information de structure de données sur le système de livraison qui est stockée sous forme d'un ou de plusieurs éléments d'information dans la base de données.

19. Méthode selon une des revendications 16, 17 ou 18
**caractérisée par le fait**
**qu'**une structuration de blocs de données s'effectue pour la transmission à un système cible à l'extérieur de la base de données sur la base d'une information de structure de données sur le système cible stockée sous forme d'un ou de plusieurs éléments d'information dans la base de données.

20. Méthode selon une des revendications 16 à 19,
**caractérisée par le fait**
**qu'**une transmission de blocs de données d'une première structure vers une deuxième structure s'effectue d'après des règles d'affectation stockées sous forme d'un ou de plusieurs éléments d'information dans la base de données.

21. Méthode selon une des revendications 16 à 20,
**caractérisée par le fait**
**qu'**une communication de programmes d'application avec la base de données s'effectue sous forme de commandes transmise à la banque de données.

22. Méthode selon la revendication 21,
**caractérisée par le fait**
**qu'**une commande transmise à la banque de données présente au moins des indications sur la nature de la commande.

23. Méthode selon la revendication 21 ou 22
**caractérisée par le fait**
**qu'**un pilotage des commandes de programmes d'application s'effectue vers la base de données au moyen d'une installation centrale de contrôle (98).

24. Méthode selon la revendication 23,
**caractérisée par le fait**
**que** l'installation centrale de contrôle (98) procède à un examen de l'intégrité des données d'une commande au moyen de règles stockées sous forme d'un ou de plusieurs éléments d'information dans la base de données de la banque de données.

25. Méthode selon la revendication 23 ou 24
**caractérisée par le fait**
**qu'**une commande transmise à la banque de données présente une date de traitement et que l'installation centrale de contrôle (98) provoque l'exécution de la commande à la date de traitement.

26. Méthode selon la revendication 23, 24 ou 25
**caractérisée par le fait**
**que** l'installation centrale de contrôle (98) exécute des commandes partielles d'au moins deux programmes d'application, les commandes partielles formant ensemble une commande commune vers la banque de données, indépendamment l'une de l'autre selon les besoins de chaque commande partielle.

27. Méthode selon une des revendications 23 à 26,
**caractérisée par le fait**
**que** l'installation centrale de contrôle (98) informe un programme d'application de l'état d'exécution d'une commande.

28. Méthode selon une des revendications 23 à 27,
**caractérisée par le fait**
**que** l'installation centrale de contrôle (98) crée des données supplémentaires sur la base d'informations de la banque de données.

29. Programme de gestion d'informations pour l'exécution sur un ou plusieurs ordinateurs disposant d'installations pour l'exécution d'une méthode selon une des revendications 16 à 28.

30. Dispositif destiné à l'enregistrement et à la gestion d'informations sous forme de blocs de données d'une structure quelconque avec
- au moins un ordinateur équipé d'un programme de gestion d'informations (90) selon la revendication 29, et
- au moins un dispositif de mémoire pour l'enregistrement de la base de données gérée par le programme de gestion d'informations (90).

31. Dispositif selon la revendication 30,
**caractérisé par le fait**
**que** le programme de gestion d'informations (90) et la base de données gérée par le programme de gestion d'informations sont installés sur différents ordinateurs.

32. Dispositif selon la revendication 30 ou 31,
**caractérisé par le fait**
**qu'**au moins un ordinateur du dispositif échange des données par l'intermédiaire d'un réseau.

33. Dispositif selon la revendication 30, 31 ou 32,
**caractérisé par le fait**
**qu'**au moins un ordinateur du dispositif est accessible par un réseau public.
